# EUROPEAN PATENT APPLICATION

(11) **EP 4 782 879 A1**
(43) Date of publication of application: **29.07.2026**
(21) Application number: 24876514.1
(22) Date of filing: 08.10.2024
(51) Int. Cl.: G01S 7/491, G01S 7/481, G01S 17/89

(54) **OPTICAL MODULE, LIGHT DETECTION AND RANGING, AND TERMINAL**

(30) Priority: 10.10.2023 CN 202311306196
(71) Applicant: Yinwang Intelligent Technologies Co., Ltd., Shenzhen, Guangdong 518110 (CN)
(72) Inventor: LIN, Jiao, Shenzhen, Guangdong 518129 (CN); WANG, Qingfeng, Shenzhen, Guangdong 518129 (CN); LIU, Jun, Shenzhen, Guangdong 518129 (CN); HU, Futai, Shenzhen, Guangdong 518129 (CN); LI, Menglin, Shenzhen, Guangdong 518129 (CN)
(74) Representative: Gill Jennings & Every LLP
(86) International application number: PCT/CN2024/123477
(87) International publication number: WO 2025/077700

(57) **Abstract**

An optical module, a lidar, and a terminal are provided, and are used in the field of detection technologies. The optical module includes N (N is a positive integer) transmit ports, N receive ports, a light beam processing module, and a beam expansion module. The N transmit ports are configured to transmit N transmitted light beams, and the N receive ports are configured to receive returned light beams of the N transmitted light beams. The light beam processing module is configured to: transmit the N transmitted light beams to the beam expansion module, and deflect N returned light beams from the beam expansion module and propagate the N deflected returned light beams to the N receive ports. The beam expansion module is configured to perform beam expansion on the N transmitted light beams. The N returned light beams are the returned light beams of the N transmitted light beams. The N transmitted light beams that pass through the light beam processing module and the N returned light beams from the beam expansion module are coaxial light beams. The optical module has a relatively small overall volume. When the optical module is used in a detection apparatus, an overall size of the detection apparatus can be significantly reduced without lowering detection performance of the detection apparatus.

## Description

This application claims priority to Chinese Patent Application No. 202311306196.2, filed with the China National Intellectual Property Administration on October 10, 2023 and entitled "OPTICAL MODULE, LIDAR, AND TERMINAL", which is incorporated herein by reference in its entirety.

### TECHNICAL FIELD

This application relates to the field of detection technologies, and in particular, to an optical module, a lidar, and a terminal.

### BACKGROUND

With development of information technologies and computer vision, detection technologies develop rapidly, and various detection apparatuses bring great convenience to people's life and travel. The detection apparatuses may be considered as "eyes" for environment sensing of devices, and include vision-based sensors such as cameras, and radar-based sensors such as millimeter-wave radars, lidars, and ultrasonic radars. A lidar (light detection and ranging, Lidar, or referred to as a light detection and ranging apparatus) has advantages of high resolution, good detection performance, and strong concealment, and plays an important role in a process of sensing an environment by a device. In particular, the lidar has been widely used in the field of intelligent driving, to facilitate further development of intelligent driving technologies. A coherent lidar is a radar that uses frequency-modulated signal light as a transmitted signal to detect a target, and performs processing based on local oscillation (local oscillation, LO) of the transmitted signal and a returned signal of the transmitted signal to obtain related information of the target. A laser carrier of the coherent lidar is usually modulated in a specific form, so that a frequency changes with time. A rule of the frequency change may be a sawtooth waveform, a triangular waveform, a sine waveform, or the like. A lidar that transmits a light beam whose frequency changes linearly is referred to as a linear frequency-modulated continuous wave (frequency-modulated continuous wave, FMCW) lidar. The linear FMCW lidar combines a laser linear frequency sweeping ranging technology and a scanning imaging technology, and has a unique speed detection advantage; and therefore is widely used in intelligent driving scenarios.

The lidar includes a transmit end and a receive end. Because the lidar needs to transmit and receive lasers, a plurality of optical elements further need to be disposed in the lidar to process light beams. Especially for the FMCW lidar, coherent components (such as an optical path for transmitting LO, an optical path of a returned signal, and a frequency mixing component of LO) are needed to support coherent detection. However, the lidar is usually mounted on a movable terminal. If the lidar has a relatively large volume, relatively large space needs to be occupied. As a result, aesthetics of the movable terminal and riding comfort of users may be affected. In some solutions, a length of an optical path of the lidar is reduced, and a small-volume optical element is used to increase an overall volume of the lidar. However, in this manner, a diameter of a light beam transmitted by the lidar is usually reduced, and therefore a light spot formed by the transmitted light beam is relatively small, thereby lowering detection performance of the lidar.

How to reduce the volume of the lidar without lowering the detection performance of the lidar is a hot issue being studied by persons skilled in the art.

### SUMMARY

Embodiments of this application provide an optical module, a lidar, and a terminal, to reduce a volume of a detection apparatus without lowering detection performance of the lidar.

According to a first aspect, an embodiment of this application provides an optical module. The optical module includes N transmit ports, N receive ports, a light beam processing module, and a beam expansion module, where N is an integer greater than or equal to 0. The N transmit ports are configured to transmit N transmitted light beams, and the N receive ports are configured to receive returned light beams of the N transmitted light beams. The light beam processing module is configured to: transmit the N transmitted light beams to the beam expansion module, and deflect N returned light beams from the beam expansion module and propagate the N deflected returned light beams to the N receive ports. The beam expansion module is configured to perform beam expansion on the N transmitted light beams.

The N returned light beams are the returned light beams of the N transmitted light beams. The N transmitted light beams that pass through the light beam processing module and the N returned light beams from the beam expansion module are coaxial light beams.

This embodiment of this application provides the optical module including two levels of optical systems, where the light beam processing module is a first-level optical system, and the beam expansion module is a second-level optical system. The first-level optical system is configured to: implement coaxiality of a transmitted light beam and a returned light beam, and implement deflection of a returned light beam so that the returned light beam can be received by a receive port. The second-level optical system is configured to perform amplification (that is, beam expansion) on a transmitted light beam to increase a diameter of the transmitted light beam, to meet requirements of light output collimation and a receive aperture. Further, because an optical path is reversible, beam expansion is performed on the transmitted light beam after the transmitted light beam passes through the beam expansion module, and beam reduction may be performed on the returned light beam after the returned light beam passes through the beam expansion module in a reverse optical path direction of the transmitted light beam.

Because a diameter of a transmitted light beam before passing through the beam expansion module and a diameter of a returned light beam after passing through the beam expansion module are relatively small, a size of the light beam processing module may also be designed to be relatively small, thereby reducing an overall volume of a light beam module. In addition, in a case of a relatively small size of a light beam, a process tolerance corner for implementing coaxial optical elements is also relatively high, and engineering implementation difficulty is relatively small. In addition, an aperture of the second-level optical system is relatively large, to meet requirements for large-diameter light output and light reception, thereby ensuring detection performance. In addition, because the first-level optical system has implemented coaxiality of transmission and reception, the transmitted light beam and the returned light beam may share a same set of second-level optical system. In this way, an overall volume of the optical module can be further reduced. In conclusion, when the optical module is used in a detection apparatus, an overall size of the detection apparatus can be significantly reduced, thereby improving application value of the detection apparatus.

**With reference to the first aspect, in a possible implementation of the first aspect,** the N transmit ports and the N receive ports may be integrated into a same module. In some solutions, the N transmit ports and the N receive ports are implemented by using an optical fiber array or a waveguide chip. For example, the N transmit ports and the N receive ports may be disposed at one end face of the waveguide chip.

Further, the N transmit ports and the N receive ports may be arranged along a first direction. Alternatively, when N>1, the N receive ports may be arranged at an end face of a module along a first direction. In this case, the N transmit ports and the N receive ports may be disposed at a same end face or different end faces.

Because an FMCW needs to perform frequency mixing on LO corresponding to the transmitted light beam and the returned light beam, the N transmit ports and the N receive ports are integrated into a same module, to greatly improve component integration of the detection apparatus based on an FMCW technology, thereby further reducing a size of the entire apparatus.

**With reference to the first aspect, in another possible implementation of the first aspect,** the N transmit ports and the N receive ports may be integrated into different modules. Further, when N>1, the N receive ports may be arranged at an end face of a module along a first direction. In this case, the N transmit ports and the N receive ports may be disposed at a same end face or different end faces.

**With reference to the first aspect, in another possible implementation of the first aspect,** the light beam processing module includes a polarization beam splitter PBS and a quarter-wave plate (quarter wave plate, QWP), and the QWP is disposed on an optical path between the PBS and the beam expansion module.

The N transmitted light beams are propagated to the beam expansion module through the PBS and the QWP, and the N returned light beams from the beam expansion module are propagated to the PBS through the QWP.

In this way, the transmitted light beam and the returned light beam are separated by using the PBS and the wave plate, to implement coaxiality of reception and transmission and significantly reduce a light beam loss in a coaxiality process.

Alternatively, the QWP may be replaced with two 1/8 wave plates. Alternatively, the QWP may be replaced with one QWP and one half-wave plate (half wave plate, HWP).

**With reference to the first aspect, in another possible implementation of the first aspect,** the light beam processing module further includes an HWP, and the HWP is disposed on an optical path between the PBS and the N receive ports. Polarization directions of the N returned light beams may be adjusted by using the HWP. In combination with the QWP, a polarization direction of a returned light beam may be the same as a polarization direction of a transmitted light beam. Particularly, when the transmit port and the receive port are implemented by using a waveguide chip (or an optical fiber array), and a waveguide (or an optical fiber) maintains polarization in a polarization direction, a combination of the HWP and the QWP may enable a polarization direction of a returned light beam to be the same as a polarization direction of a transmitted light beam, so that a polarization-maintaining direction of the returned light beam is the same as that of the waveguide, thereby reducing a loss caused due to transmission of the returned light beam in the waveguide (or the optical fiber) and improving detection performance. In addition, the combination of the HWP and the QWP has dispersion elimination effect in some scenarios and further improves detection accuracy.

**With reference to the first aspect, in another possible implementation of the first aspect,** the PBS is configured to transmit a light beam in a first polarization direction and reflect a light beam in a second polarization direction. The first polarization direction is perpendicular to the second polarization direction. Specifically, the PBS may transmit light (referred to as P-polarized light, that is, a light beam in the first polarization direction) whose polarization direction is parallel to a polarization direction of the PBS, and reflect (or block) light (referred to as S-polarized light, that is, a light beam in the second polarization direction) whose polarization direction is perpendicular to the polarization direction of the PBS.

The QWP is configured to change a polarization direction of a light beam that passes through the QWP. Polarization directions of the light beams after the returned light beams of the N transmitted light beams pass through the QWP are perpendicular to polarization directions of the N transmitted light beams. For example, the N transmitted light beams that pass through the PBS are P-polarized light, and the P-polarized light is provided to object space after passing through the QWP. A light beam (for example, the N returned light beams) returned from the object space may be S-polarized light after passing through the QWP again. The S-polarized light is reflected after passing through the PBS. In this way, coaxiality of reception and transmission can be implemented and a light beam loss in a coaxiality process can be significantly reduced.

Alternatively, in this implementation, the QWP may be replaced with two 1/8 wave plates. Alternatively, in this implementation, the QWP may be replaced with one QWP and one HWP.

**With reference to the first aspect, in another possible implementation of the first aspect,** the light beam processing module further includes a turning mirror, and the turning mirror is configured to deflect a light beam that passes through the PBS and propagate the turned light beam to the N receive ports. Further, the HWP may be disposed between the PBS and the turning mirror.

**With reference to the first aspect, in another possible implementation of the first aspect,** the optical module further includes a scanning module. The scanning module is movable, to transmit and receive light beams at a plurality of angles.

Further, the scanning module is configured to: scan, into the object space, the N transmitted light beams that pass through the beam expansion module, and propagate, to the beam expansion module, the returned light beams of the N transmitted light beams from the object space.

**With reference to the first aspect, in another possible implementation of the first aspect,** N≥2, and the N returned light beams after passing through the scanning module are arranged along a first direction. A scanning direction of the scanning module is a second direction. A walk-off angle direction of each of the N returned light beams is the second direction. The second direction is different from the first direction.

Further, the optical module further includes a light spot reorientation mechanism. The light spot reorientation mechanism is configured to: turn a walk-off angle direction of each of the N returned light beams into the arrangement direction of the N returned light beams. Optionally, the light spot reorientation mechanism is disposed on an optical path between the scanning module and the N receive ports. For example, when the light beam processing module includes the PBS, the light spot reorientation mechanism may be disposed between the beam expansion module and the PBS or disposed between the PBS and the N receive ports.

In the foregoing implementation, the N transmitted light beams are irradiated to a scanner. After the scanner scans a target object in the object space at a specific angle, the target object in the object space may reflect the N transmitted light beams to obtain corresponding returned light beams. Because the scanner keeps scanning, and there is a specific distance between the target object in the object space and the scanner, when the returned light beams pass through the scanner during returning, the scanner has rotated by a specific angle, so that the returned light beams are not propagated along the directions of the original N returned light beams but a specific deviation angle, that is, a walk-off (walk off) angle exists. It is not difficult to learn that an angle direction of the walk-off angle is the same as a scanning direction of the scanning module. However, because the N transmitted light beams form a linear array, during scanning, the scanning direction (or a fast axis direction) of the scanning module is usually different from the arrangement direction of the N transmitted light beams, and an arrangement direction of the N returned light beams is the same as the arrangement direction of the N transmitted light beams. Therefore, it is easy to learn that the angle direction of the walk-off angle is different from the arrangement direction of the N transmitted light beams.

However, in this embodiment of this application, the walk-off angle direction is adjusted to the arrangement direction of the N returned light beams by using the light spot reorientation mechanism. Because it is relatively difficult to perform walk-off angle compensation on the N receive ports in a perpendicular direction of the port arrangement direction, after the directions of the walk-off angles are adjusted to the arrangement direction of the N returned light beams, angle deviation caused by the walk-of angles of the N returned light beams may be compensated by performing displacement in the arrangement direction of the N receive ports, to help reduce a signal loss caused by the walk-off angle and improve signal effectiveness.

In some cases, if the scanner is in a stationary state, the returned light beams of the N transmitted light beams are propagated along optical paths of ideally returned light beams. In this case, the walk-off angle is 0°. Therefore, in some cases, the scanner is in an active state, and deviation angles (that is, walk-off angles) between the N returned light beams and the ideally returned light beams are a first angle (the first angle is greater than 0°). In this case, if the N receive ports are disposed on the optical paths of the ideally returned light beams, it is difficult for light spots of the N returned light beams to accurately enter the receive ports, causing light spot losses. Therefore, the receive ports deviate to a specific extent along the arrangement direction of the ports, to compensate for deviation of the N returned light beams, so that the light spots of the N returned light beams can be closer to effective reception regions of the receive ports or even overlap with centers of the receive ports. In this way, the N receive ports can receive the N returned light beams more accurately, thereby improving effectiveness of the received echo signals and improving detection performance.

**With reference to the first aspect, in another possible implementation of the first aspect,** the light spot reorientation mechanism includes a stepped reflector. The stepped reflector includes N reflective surfaces that are disposed in a stepped manner along the arrangement direction of the N returned light beams. Each reflective surface is configured to reflect one light beam.

**With reference to the first aspect, in another possible implementation of the first aspect,** the light spot reorientation mechanism includes a first stepped reflector and a second stepped reflector.

The first stepped reflector includes N first reflective surfaces that are disposed in a stepped manner. The first stepped reflector includes N second reflective surfaces that are disposed in a stepped manner. The N first reflective surfaces are opposite to the N second reflective surfaces one by one. The second stepped reflector is configured to further reflect emergent light of the first group stepped reflector.

**With reference to the first aspect, in another possible implementation of the first aspect,** each of the N first reflective surfaces is configured to turn one of the N returned light beams and propagate the turned returned light beam to one of the N second reflective surfaces. Each of the N second reflective surfaces is configured to turn one of the N returned light beams, so that a walk-off angle direction of the returned light beam is the arrangement direction of the N returned light beams.

**With reference to the first aspect, in another possible implementation of the first aspect,** the N first reflective surfaces are not parallel to the walk-off angle directions of the N returned light beams. Further, the N second reflective surfaces are not parallel to the walk-off angle directions of the N returned light beams.

For example, non-parallel includes perpendicular.

**With reference to the first aspect, in another possible implementation of the first aspect,** included angles between a bottom surface of the first stepped reflector and the N first reflective surfaces are 45°, and included angles between a bottom surface of the second stepped reflector and the N second reflective surfaces are 45°.

**With reference to the first aspect, in another possible implementation of the first aspect,** included angles between a bottom surface of the first stepped reflector and the N first reflective surfaces are 45°.

Included angles between the bottom surface of the first stepped reflector and the N second reflective surfaces gradually increase from a step center of the second stepped reflector to two step sides of the second stepped reflector.

**With reference to the first aspect, in another possible implementation of the first aspect,** the light spot reorientation mechanism is a prism, and the N first reflective surfaces and the N second reflective surfaces are implemented by plating a reflective film in the prism.

**With reference to the first aspect, in another possible implementation of the first aspect,** the first stepped reflector includes a first substrate and N first reflectors. The N first reflectors are attached to the first substrate. Each first reflector includes one first reflective surface.

The second stepped reflector includes a second substrate and N second reflectors. The N second reflectors are attached to the second substrate. Each second reflector includes one first reflective surface.

**With reference to the first aspect, in another possible implementation of the first aspect,** the beam expansion module includes a first lens group and a second lens group, and the first lens group and the second lens group have a common focal plane.

**With reference to the first aspect, in another possible implementation of the first aspect,** the light spot reorientation mechanism is disposed between the first lens group and the second lens group.

**With reference to the first aspect, in another possible implementation of the first aspect,** the first lens group includes N lenses, and each of the N lenses is configured to transmit one of the N returned light beams.

**With reference to the first aspect, in another possible implementation of the first aspect,** the optical module further includes a transmit lens group and a receive lens group. The transmit lens group is disposed between the beam expansion module and the N transmit ports. The receive lens group is disposed between the beam expansion module and the N receive ports.

The N transmit ports, the transmit lens group, the N receive ports, the receive lens group, and the light beam processing component are packaged as a first optical assembly. The beam expansion module is packaged as a second optical assembly. Light transmissive windows are disposed on the first optical assembly and the second optical assembly. The light transmissive windows are configured to transmit the N transmitted light beams and the N returned light beams.

**With reference to the first aspect, in another possible implementation of the first aspect,** the N transmit ports and the N receive ports are waveguide ports of a waveguide chip.

**With reference to the first aspect, in another possible implementation of the first aspect,** the N transmitted light beams are FMCW lasers.

According to a second aspect, an embodiment of this application further provides an optical module. The optical module includes a light beam transmit/receive module and a light spot reorientation mechanism.

The light beam transmit/receive module includes N transmit ports and N receive ports, the N transmit ports and the N receive ports are arranged in an interleaved manner along an end face of the light beam transmit/receive module, and N is an integer greater than 1.

The N transmit ports are configured to transmit N transmitted light beams, and the N receive ports are configured to receive N returned light beams. The N returned light beams are returned light beams of the N transmitted light beams. The light spot reorientation mechanism is disposed on optical paths of the N transmitted light beams and the N returned light beams. The N transmitted light beams after passing through the light spot reorientation mechanism are used to scan object space. A scanning direction is a second direction. Walk-off angle directions of the N returned light beams before passing through the light spot reorientation mechanism are the second direction. The N returned light beams are arranged along a first direction. The second direction is different from the first direction. The light spot reorientation mechanism is configured to: turn a walk-off angle direction of each of the N returned light beams into the arrangement direction of the N returned light beams, and provide the N returned light beams for the N receive ports.

**With reference to the second aspect, in a possible implementation of the second aspect,** the light spot reorientation mechanism includes a first stepped reflector and a second stepped reflector.

The first stepped reflector includes N first reflective surfaces that are disposed in a stepped manner.

The first stepped reflector includes N second reflective surfaces that are disposed in a stepped manner. The N first reflective surfaces are opposite to the N second reflective surfaces one by one. The second stepped reflector is configured to further reflect emergent light of the first group stepped reflector.

**With reference to the second aspect, in another possible implementation of the second aspect,** each of the N first reflective surfaces is configured to turn one of the N returned light beams and propagate the turned returned light beam to one of the N second reflective surfaces.

Each of the N second reflective surfaces is configured to turn one of the N returned light beams, so that a walk-off angle direction of the returned light beam is the arrangement direction of the N returned light beams.

**With reference to the second aspect, in another possible implementation of the second aspect,** included angles between a bottom surface of the first stepped reflector and the N first reflective surfaces are 45°, and included angles between a bottom surface of the second stepped reflector and the N second reflective surfaces are 45°.

**With reference to the second aspect, in another possible implementation of the second aspect,** included angles between a bottom surface of the first stepped reflector and the N first reflective surfaces are 45°.

Included angles between the bottom surface of the first stepped reflector and the N second reflective surfaces gradually increase from a step center of the second stepped reflector to two step sides of the second stepped reflector.

**With reference to the second aspect, in another possible implementation of the second aspect,** the light spot reorientation mechanism is a prism, and the N first reflective surfaces and the N second reflective surfaces are implemented by plating a reflective film in the prism.

**With reference to the second aspect, in another possible implementation of the second aspect,** the first stepped reflector includes a first substrate and N first reflectors. The N first reflectors are attached to the first substrate. Each first reflector includes one first reflective surface.

The second stepped reflector includes a second substrate and N second reflectors. The N second reflectors are attached to the second substrate. Each second reflector includes one first reflective surface.

**With reference to the second aspect, in another possible implementation of the second aspect,** the optical module further includes a beam expansion module, and the beam expansion module is configured to perform beam expansion on the N transmitted light beams and perform beam reduction on the N returned light beams.

**With reference to the second aspect, in another possible implementation of the second aspect,** the beam expansion module includes a first lens group and a second lens group, and the first lens group and the second lens group have a common focal plane. The first lens group is disposed on an optical path between the light spot reorientation structure and the second lens group.

**With reference to the second aspect, in another possible implementation of the second aspect,** the beam expansion module includes a first lens group and a second lens group, and the first lens group and the second lens group have a common focal plane. Further, the light spot reorientation mechanism is disposed on an optical path between the first lens group and the second lens group.

**With reference to the second aspect, in another possible implementation of the second aspect,** the first lens group includes N lenses, and each of the N lenses is configured to transmit one of the N returned light beams.

**With reference to the second aspect, in another possible implementation of the second aspect,** the optical module further includes a transmit lens group and a receive lens group. The transmit lens group is disposed between the beam expansion module and the N transmit ports. The receive lens group is disposed between the beam expansion module and the N receive ports.

The N transmit ports, the transmit lens group, the N receive ports, the receive lens group, and the light beam processing component are packaged as a first optical assembly. The beam expansion module is packaged as a second optical assembly. Light transmissive windows are disposed on the first optical assembly and the second optical assembly. The light transmissive windows are configured to transmit the N transmitted light beams and the N returned light beams.

**With reference to the second aspect, in another possible implementation of the second aspect,** the N transmit ports and the N receive ports are waveguide ports of a waveguide chip.

**With reference to the second aspect, in another possible implementation of the second aspect,** the N transmitted light beams are FMCW lasers.

According to a third aspect, an embodiment of this application provides a lidar. The lidar includes the optical module described in any implementation of the first aspect, or the lidar includes the optical module described in any implementation of the second aspect.

In a possible implementation of the third aspect, the lidar further includes a light source. For example, the light source is a laser.

In another possible implementation of the third aspect, the lidar further includes a detector, and the detector is configured to obtain an electrical signal based on a light beam.

According to a fourth aspect, an embodiment of this application provides a terminal. The terminal includes the optical module according to any implementation of the first aspect, or the terminal includes the optical module according to any implementation of the second aspect, or the terminal includes the lidar according to any implementation of the third aspect.

Optionally, the terminal may be an intelligent terminal or a transportation means such as a vehicle, an uncrewed aerial vehicle, or a robot. Certainly, the terminal may alternatively be replaced with an industrial device, an entertainment device, or the like. The intelligent terminal is, for example, a mobile phone, a tablet computer, a notebook computer, a smart band, a smartwatch, or smart glasses. The transportation means is, for example, a vehicle, a ship, an aircraft, or a logistics robot. The industrial device is, for example, an industrial robot or a robotic arm. The entertainment device is, for example, a virtual reality (virtual reality, VR) device, a mixed reality (mixed reality, MR) device, a massage chair, or a 4D cinema cockpit. A device to which an electrical connector can be used is not strictly limited in this application.

### BRIEF DESCRIPTION OF DRAWINGS

The following briefly describes accompanying drawings used in describing embodiments.
FIG. 1 is a diagram of a structure of a detection apparatus based on an off-axis architecture according to an embodiment of this application;
FIG. 2 is a diagram of a structure of a detection apparatus based on a coaxial architecture according to an embodiment of this application;
FIG. 3 is a diagram of an optical module according to an embodiment of this application;
FIG. 4A is a diagram of a waveguide chip according to an embodiment of this application;
FIG. 4B is a diagram of an optical path design of a waveguide chip according to an embodiment of this application;
FIG. 5 is a diagram of another waveguide chip according to an embodiment of this application;
FIG. 6 is a diagram of still another waveguide chip according to an embodiment of this application;
FIG. 7 is a diagram of another optical module according to an embodiment of this application;
FIG. 8 is a diagram of another optical module according to an embodiment of this application;
FIG. 9 is a diagram of two beam expansion modules according to an embodiment of this application;
FIG. 10 is a diagram of a structure of another optical module according to an embodiment of this application;
FIG. 11 is a diagram of a structure of another optical module according to an embodiment of this application;
FIG. 12 is a diagram of a walk-off angle according to an embodiment of this application;
FIG. 13 is another diagram of a walk-off angle according to an embodiment of this application;
FIG. 14 is a diagram of a structure of another optical module according to this application;
FIG. 15 is a diagram of effect of light spot reorientation according to an embodiment of this application;
FIG. 16A is a diagram of a structure of a stepped reflector according to an embodiment of this application;
FIG. 16B is a diagram of a structure of another stepped reflector according to an embodiment of this application;
FIG. 16C is a diagram of a structure of another stepped reflector according to an embodiment of this application;
FIG. 17A is a diagram of a structure of another light spot reorientation mechanism according to an embodiment of this application;
FIG. 17B is a diagram of a structure of another light spot reorientation mechanism according to an embodiment of this application;
FIG. 17C is a diagram of a structure of another light spot reorientation mechanism according to an embodiment of this application;
FIG. 18 is a diagram of a structure of a transceiver module according to an embodiment of this application;
FIG. 19 is a diagram of a structure of another optical module according to an embodiment of this application;
FIG. 20 is a diagram of a structure of another optical module according to an embodiment of this application;
FIG. 21 is a diagram of a structure of another optical module according to an embodiment of this application;
FIG. 22 is a diagram of transmit optical paths of another optical module according to an embodiment of this application;
FIG. 23 is a diagram of a structure of an optical module using an off-axis architecture according to an embodiment of this application; and
FIG. 24 is a diagram of a structure of another optical module using an off-axis architecture according to an embodiment of this application.

### DESCRIPTION OF EMBODIMENTS

In recent years, with higher requirements imposed on device intelligence and rapid development of detection technologies, a detection apparatus has been widely used in many fields. The detection apparatus herein includes an apparatus for performing detection by transmitting a light beam and receiving a light beam returned from object space. Detection may be understood as obtaining related information of a target in the object space. The detection includes but is not limited to one or more detections such as target detection, distance measurement, speed measurement, angle measurement, target tracking, and imaging recognition. For example, the detection apparatus may be a lidar, or a fusion detection apparatus integrating a lidar and a camera.

A detection manner of the detection apparatus may include a coherent detection manner. A coherent detection technology is a manner of extracting related information of a target based on a frequency mixing signal of two channels of signals (for example, LO and a returned light beam). Because a light beam changes after the transmitted light beam is reflected by the target, the information about the target is extracted based on this change through coherent detection. Coherent detection has advantages in sensitivity, a target resolving capability, and anti-interference. In some solutions, by transmitting a frequency-modulated continuous wave, a speed of a target may be calculated based on a frequency change of a returned light beam and a frequency change of a local oscillator signal of a transmitted light beam.

The following first describes architectures of two detection apparatuses by using examples.

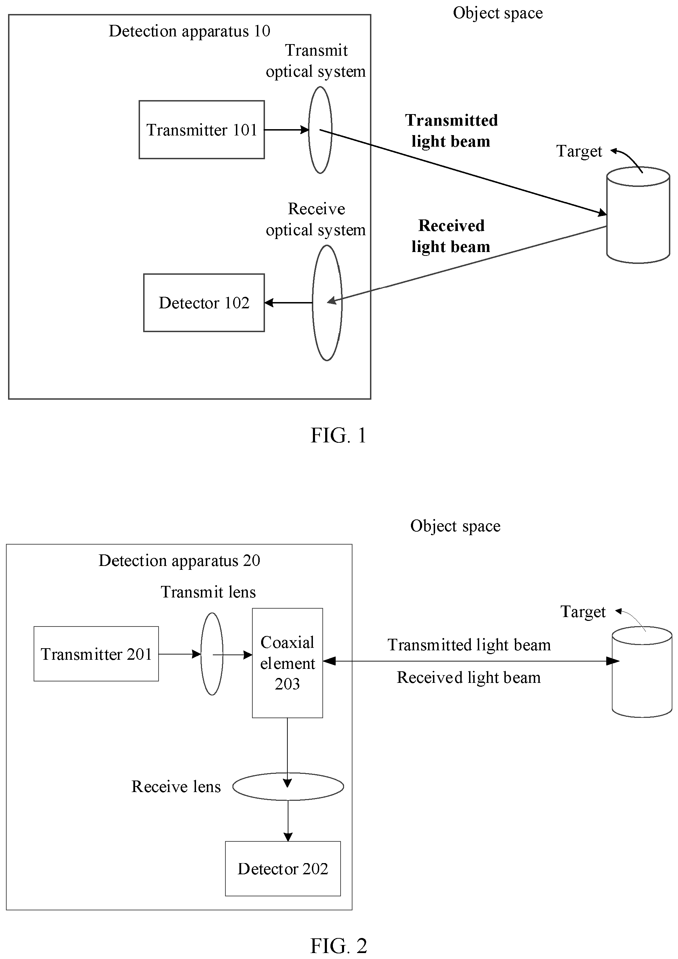

FIG. 1 is a diagram of a structure of a detection apparatus based on an off-axis architecture according to an embodiment of this application. The detection apparatus 10 includes a transmitter 101 and a detector 102, and optionally further includes a transmit optical system and a receive optical system. The transmitter 101 may generate a transmitted light beam. The transmitted light beam is propagated to object space via the transmit optical system. The transmitted light beam is reflected by a target in the object space to form a returned light beam. A part of the returned light beam may enter the receive optical system to be propagated to the detector 102. In FIG. 1, the transmitted light beam and the returned light beam have different main optical axes, in other words, the main optical axis of the transmitted light beam is not collinear with the main optical axis of the returned light beam that can be detected by the detector. Therefore, it is difficult to align a field of view corresponding to a transmitted light beam transmitted by the transmitter with a field of view corresponding to a light beam that can be received by the detector.

FIG. 2 is a diagram of a structure of a detection apparatus based on a coaxial architecture according to an embodiment of this application. The detection apparatus 20 includes a transmitter 201, a detector 202, and a coaxial element 203. The transmitter 201 may generate a transmitted light beam. The transmitted light beam is propagated to object space via a transmit optical system and the coaxial element 203. The transmitted light beam is reflected by a target in the object space to form a returned light beam. The returned light beam also enters a receive optical system via the coaxial optical element to be propagated to the detector 202. In FIG. 2, the transmitted light beam and the returned light beam have a same main optical axis, in other words, the main optical axis of the transmitted light beam is collinear with the main optical axis of the returned light beam that can be detected by the detector.

With reference to FIG. 1 and FIG. 2, it can be learned that light beams need to be transmitted and returned in the detection apparatus. Therefore, a plurality of optical elements further need to be disposed inside the detection apparatus to process the light beams. With a user has requirements for aesthetics, comfort, and stability of a terminal, the detection apparatus develops more toward miniaturization and integration. How to reduce a size of the entire detection apparatus is a hot issue being studied by persons skilled in the art. Embodiments of this application provide an optical module, a lidar, and a terminal, to reduce a volume of a detection apparatus without lowering detection performance of the detection apparatus. The following describes solutions of this application.

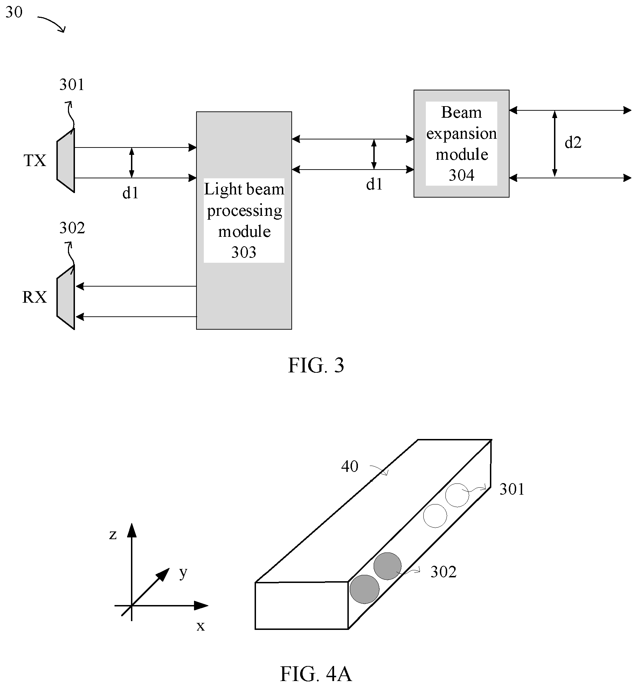

FIG. 3 is a diagram of an optical module according to an embodiment of this application. The optical module 30 includes a transmit port 301, a receive port 302, a light beam processing module 303, and a beam expansion module 304. Specifically:
There may be one or more transmit ports 301. When there is one transmit port, one transmit port may transmit one transmitted light beam (or referred to as one channel of transmitted light beam). When there are a plurality of transmit ports, the plurality of transmit ports may respectively transmit light beams to form a plurality of transmitted light beams (or referred to as a plurality of channels of transmitted light beams). For ease of description, an example in which the optical module includes N transmit ports is used for description in this application, where N is an integer greater than or equal to 1. It may be understood that N transmitted light beams may be transmitted through the N transmit ports. Similarly, a quantity of receive ports 302 is also set to N for ease of description. The N receive ports are configured to receive returned light beams of the N transmitted light beams. For example, the N receive ports are configured to receive the N returned light beams, and each receive port is configured to receive one returned light beam.

It should be understood that a total quantity of transmit ports (or receive ports) in the optical module 30 may be greater than N. For example, the optical module includes 30 transmit ports, and 10 transmit ports are currently in an operating state. In this case, 10 (that is, N=10) channels of transmitted light beams may be transmitted via the 10 transmit ports.

The light beam processing module 303 is configured to process a light beam. The processing herein includes propagation and a change of a feature of the light beam in a propagation process. Propagation may include one or more of propagation processes such as transmission, refraction, or reflection. The change of the feature of the light beam includes one or more of a change of an optical path of the light beam (for example, turning or reflection), a change of a polarization direction of light included in the transmitted light beam, a change of wavelength distribution (for example, filtering), and the like.

For example, the light beam processing module 303 is configured to: transmit the N transmitted light beams to the beam expansion module 304, and propagate the N returned light beams from the beam expansion module 304 to the N receive ports 302. Further, the light beam processing module 303 may propagate the N returned light beams to the N receive ports along optical paths different from optical paths of the N transmitted light beams (in other words, light beam turning is performed).

It can be learned with reference to FIG. 3 that the N returned light beams herein are the returned light beams of the N transmitted light beams. The N transmitted light beams that pass through the light beam processing module 303 and the N returned light beams from the beam expansion module 304 are coaxial light beams. It should be noted that the coaxial light beams herein mean that the N transmitted light beams and the N returned light beams may pass through a common optical element. In addition, in an ideal case, main optical axes of the N transmitted light beams passing through the light beam processing module 303 and the N returned light beams from the beam expansion module 304 needs to be collinear. However, in an actual implementation process, due to an error of process manufacturing, rotation of a scanning mechanism, or even motion of the optical module 30, the main optical axes of the N transmitted light beams and the N returned light beams may not be completely collinear, but the N transmitted light beams and the N returned light beams may both pass through the beam expansion module 304 and other optical elements (described below). Therefore, the N transmitted light beams and the N returned light beams are coaxial light beams.

The beam expansion module 304 is configured to perform beam expansion on the N transmitted light beams. As shown in FIG. 1, one transmitted light beam is used as an example. Before the transmitted light beam passes through the beam expansion module 304, a diameter of the transmitted light beam is represented as d1. After the transmitted light beam passes through the beam expansion module 304, the diameter of the transmitted light beam is represented as d2. Herein, d2>d1. Further, because an optical path is reversible, beam expansion is performed on the transmitted light beam after the transmitted light beam passes through the beam expansion module 304, and beam reduction may be performed on the returned light beam after the returned light beam passes through the beam expansion module 304 in a reverse optical path direction of the transmitted light beam.

With reference to FIG. 3, it can be learned that this application provides an optical module including two levels of optical systems. The light beam processing module 303 is a first-level optical system, and the beam expansion module 304 is a second-level optical system. The first-level optical system is configured to: implement coaxiality of a transmitted light beam and a returned light beam, and implement deflection of a returned light beam, so that the returned light beam can be received by a receive port. The second-level optical system is configured to perform amplification (that is, beam expansion) on a transmitted light beam to increase a diameter of the transmitted light beam, to meet requirements of light output collimation and a receive aperture. Further, because an optical path is reversible, beam expansion is performed on the transmitted light beam after the transmitted light beam passes through the beam expansion module, and beam reduction may be performed on the returned light beam after the returned light beam passes through the beam expansion module in a reverse optical path direction of the transmitted light beam.

Because a diameter of a transmitted light beam before passing through the beam expansion module 304 and a diameter of a returned light beam after passing through the beam expansion module 304 are relatively small, a size of the light beam processing module 303 may also be designed to be relatively small, thereby reducing an overall volume of a light beam module. In addition, in a case of a relatively small size of a light beam, a process tolerance corner for implementing coaxial optical elements is also relatively high, and engineering implementation difficulty is relatively small. In addition, an aperture of the second-level optical system is relatively large, to meet requirements for large-diameter light output and light reception, thereby ensuring detection performance. In addition, because the first-level optical system has implemented coaxiality of transmission and reception, the transmitted light beam and the returned light beam may share a same set of second-level optical system. In this way, an overall volume of the optical module can be further reduced. In conclusion, when the optical module is used in a detection apparatus, an overall size of the detection apparatus can be significantly reduced, thereby reducing the costs.

The following describes the transmit port and the receive port in embodiments of this application.

In some possible implementations, the transmit port may be implemented by using a plurality of waveguides, optical amplifiers, or the like. In some solutions, the transmit port is implemented by using a coupler disposed on a waveguide chip, for example, an edge coupler or a grating coupler. In some other solutions, the transmit port may be implemented by using a light outlet (or a light outlet end face) of an optical amplifier. The optical amplifier is an apparatus for amplifying signal light, and includes but is not limited to a semiconductor amplifier, an optical fiber amplifier, or the like. The semiconductor amplifier (semiconductor optical amplifier, SOA) uses a semiconductor material as a gain medium, and can amplify power of the signal light without significantly reducing an optical index of the signal light. Alternatively, the transmit port may further include a plurality of **laser transmitters, and the laser transmitter may generate a transmitted light beam.**

In some possible implementations, the receive port may be a receive port of a waveguide. For example, the receive port may be implemented by using a coupler disposed on a waveguide chip. Alternatively, the receive port may be end faces of a plurality of detection elements for receiving light, and the detection element may be a photodiode (Photo Diode, PD) that can detect light energy, such as an InGaAs PD, an InP PD, or a germanium PD.

**In a possible implementation,** the N transmit ports and the N receive ports may be integrated into a same module. In some solutions, the N transmit ports and the N receive ports are implemented by using modules that can propagate light beams, such as an optical fiber array or a waveguide. In the following, a module into which a waveguide (or an optical fiber) is integrated is described by using a waveguide chip. This name is an example description, and is not construed as limitation on a structure of the module.

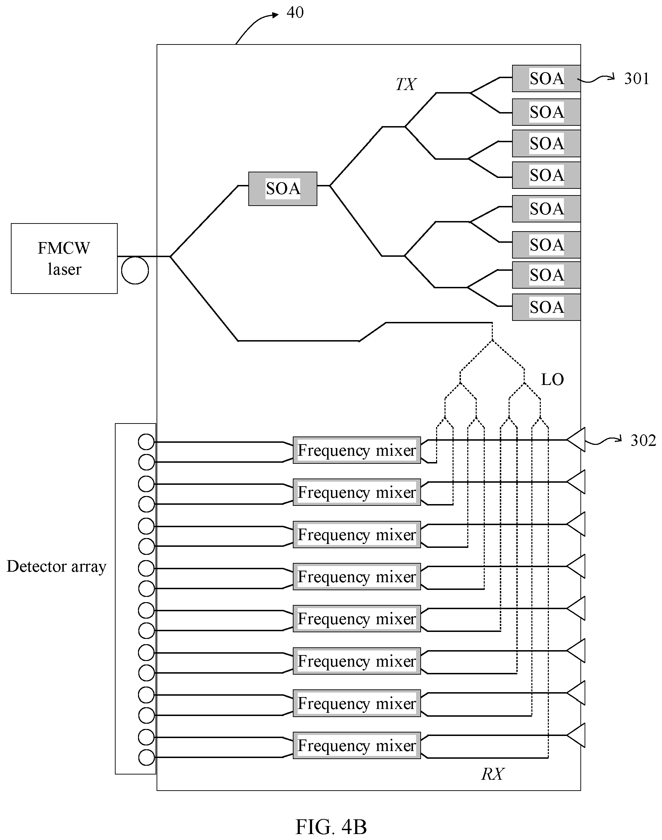

Optionally, the N transmit ports and the N receive ports may be located on a same end face. FIG. 4A is a diagram of a waveguide chip according to an embodiment of this application. The N (for example, N=2) transmit ports 301 and the N receive ports 302 may be disposed on an end face of the waveguide chip 40. An arrangement direction of the N receive ports 302 is a first direction (that is, a y direction shown in FIG. 4A). Further, the N transmit ports and the N receive ports may be all arranged along the y direction. As shown in FIG. 4A, the N transmit ports 301 and the N receive ports 302 are all arranged along the y direction. For ease of description, the y direction is a direction shown in an example in this solution. For an x direction, a z direction, and the like, refer to a coordinate system shown in FIG. 4A. All the directions are examples and are not construed as limitation on this solution. FIG. 4B is a diagram of an optical path design of a waveguide chip according to an embodiment of this application. The waveguide chip 40 may receive a light beam of an FMCW laser. The light beam is classified as a transmitted (transmitter, Tx) light beam and an LO light beam. The transmitted light beam is split and amplified (implemented by using an SOA) inside a waveguide and then transmitted. The transmit port 301 is implemented by using an optical port of the SOA. The waveguide chip is further provided with a receive port. A received (Receiver, Rx) light beam received by the receive port may be mixed with LO in a frequency mixer. A signal obtained after the frequency mixing is used as an input of a detection element (for example, a PD) in a detector array, and is received by the detection element for processing, to obtain related information of a target in object space.

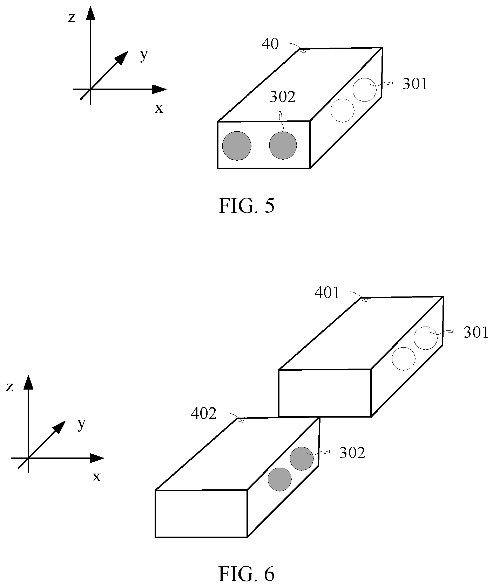

Alternatively, optionally, the N transmit ports and the N receive ports may be located on different end faces of a same module. FIG. 5 is a diagram of another waveguide chip according to an embodiment of this application. The N transmit ports 301 may be located on a left-side end face, and the N receive ports 302 are located on a front end face of the waveguide chip 40. When N>1, an arrangement direction of the N receive ports 302 are an x direction.

**In another possible implementation,** the N transmit ports and the N receive ports may be integrated into different modules. For example, the N transmit ports and the N receive ports are located on different waveguide chips. FIG. 6 is a diagram of still another optical platform according to an embodiment of this application. As shown in FIG. 6, the N transmit ports 301 may be located on a first waveguide chip 401, and the N receive ports may be located on a second waveguide chip 402. Further, when N>1, an arrangement direction of the N receive ports 302 are a y direction.

**The following describes the light beam processing module 303 in the optical module shown in** **FIG. 3****.** In the foregoing solution, the light beam processing module 303 may implement coaxiality of transmission and reception. In a specific implementation process, the light beam processing module 303 may include an optical element that is configured to implement coaxiality, such as a PBS, a circulator, or a semi-transparent and semi-reflective spectroscope.

The semi-transparent and semi-reflective spectroscope can split one beam of light into two beams of light with approximately the same spectral components. For example, in a specific wavelength region, for example, in a wavelength range from 300 nm to 100 µm, same transmittance and same reflectivity (the same herein is not necessarily completely the same, and fluctuation may occur in a specific range) are implemented for all wavelengths. Generally, a neutral beam splitting mirror by using which transmitted light and reflected light each account for 50% is commonly used. However, this application is also applicable to a beam splitter with another transmission proportion (reflection proportion), for example, a beam splitter with 40% transmission and 60% reflection. In this case, after the N transmitted light beams pass through the semi-transparent and semi-reflective spectroscope, each transmitted light beam is partially reflected and partially transmitted. In this case, an energy loss exists for the N transmitted light beams propagated to the beam expansion module 304. Similarly, after passing through the semi-transparent and semi-reflective spectroscope, the N returned light beams from the beam expansion module are also partially transmitted and partially transmitted. In this case, a specific energy loss also exists for the N returned light beams.

The circulator is a multi-port component that sequentially transmits an incident wave that enters any port of the circulator, to a next port in a direction determined by a static bias magnetic field. An outstanding feature of the circulator is unidirectionally energy transmission and controlling an electromagnetic wave along a specific circular direction. For example, one circulator has three ports. A light beam is transmitted from a port 1 to a port 2, from the port 2 to a port 3, and from the port 3 to the port 1, and other paths are not available. In other words, the light beam cannot be transmitted from the port 2 to the port 1 (that is, there is high isolation). In this case, the N transmitted light beams may enter from the port 1 and then be transmitted from the port 2, and the transmitted light beams may be further propagated to the beam expansion module; and the N returned light beams from the beam expansion module may enter from the port 2 and then be transmitted from the port 3, to implement coaxiality of reception and transmission and reduce a light beam loss.

A polarization beam splitter (Polarization Beam Splitter, PBS) is configured to divide a beam of light into two beams of linearly polarized light in orthogonal polarization directions: a horizontal polarization direction and a vertical polarization direction, and separate the two beams to two different propagation directions. Generally, the two propagation directions are perpendicular to each other. For example, the PBS may divide an incident light beam into P-polarized light and S-polarized light, and polarization directions of the P-polarized light and the S-polarized light are perpendicular to each other.

Because the PBS splits light based on a polarization direction of the light, coaxiality of reception and transmission can be implemented by combining the PBS with an element (for example, a wave plate) that can change a polarization direction of a light beam. In a possible case, if polarization directions of the N transmitted light beams entering the PBS are the same as a polarization direction of the P-polarized light, the N transmitted light beams pass through the PBS. In this case, by disposing, between the PBS and the beam expansion module, an optical element that can change a polarization direction, the polarization directions of the N returned light beams entering the PBS may be adjusted to be the same as a polarization direction of the S-polarized light, so that the N returned light beams are reflected by the PBS. In conclusion, by combining the PBS with the element that can change a polarization direction of a light beam, coaxiality of reception and transmission can be implemented, and a loss of an echo signal can be reduced.

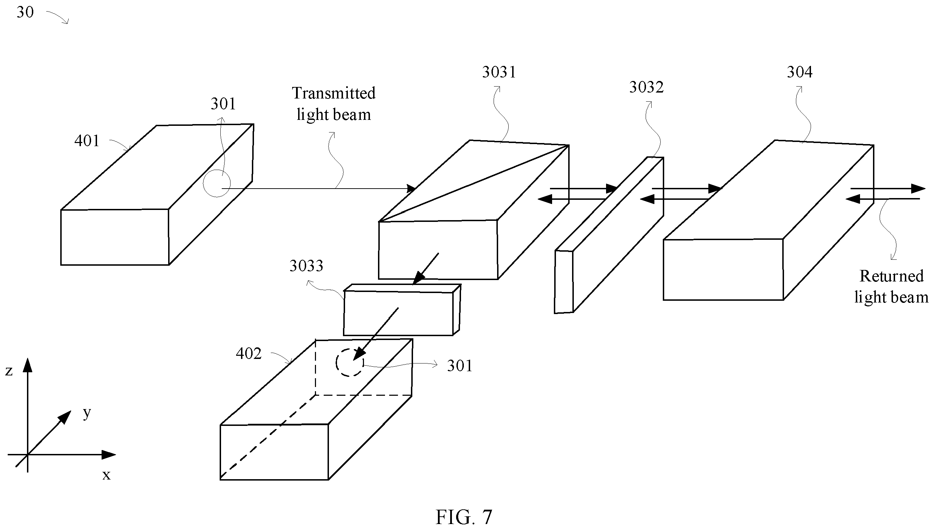

FIG. 7 is a diagram of another optical module according to an embodiment of this application. In the optical module 30 shown in FIG. 7, the light beam processing module 303 includes a PBS 3031 and a QWP 3032. A light beam entering the PBS from the transmit port may include a signal whose polarization direction is a first polarization direction, and may arrive at the beam expansion module 304 through the PBS 3031 and the QWP 3032 and is further transmitted to object space. A light beam from the object space arrives at the QWP 3032 through the beam expansion module 304. A polarization direction of a light beam that passes through the QWP 3032 twice is perpendicular to a polarization direction of a light beam that passes through the PBS 3031. Therefore, the light beam that passes through the PBS is transmitted to the receive port 302 through another optical path, and is not propagated along a reverse direction of the original transmitted light beam. In addition, in FIG. 7, the transmit port and the receive port are integrated into different modules.

Further, the light beam processing module 303 may further include more components, to further process the light beam. As shown in FIG. 7, the light beam processing module 303 further includes an HWP 3033, and the HWP 3033 is disposed on an optical path between the PBS 3031 and the N receive ports 302. In this way, the light beam processing module 303 includes a PBS 3031, a QWP (that is, a 1/4 wave plate) 3032, and an HWP (that is, a 1/2 wave plate) 3033. N transmitted light beams incident to the PBS are linearly polarized light. After passing through the PBS 3031 and the QWP 3032, N transmitted reflected light beams are circularly polarized light. The circularly polarized light is irradiated to a target surface in the object space. N returned light beams obtained after reflection by a target pass through the QWP 3032. In this case, polarization directions of the N returned light beams are perpendicular to polarization directions of the N transmitted light beams incident to the PNS. Therefore, the N reflected light beams that pass through the QWP 3032 are reflected by the PBS 3031, and pass through the HWP wave plate 3033. The polarization directions of the N returned light beams are further rotated by 90 degrees to be the same as the polarization directions of the N transmitted light beams incident to the PBS. This helps further reduce a loss of a returned light beam with reference to a polarization-maintaining optical waveguide, improve effectiveness of a received returned light beam, and improve detection performance.

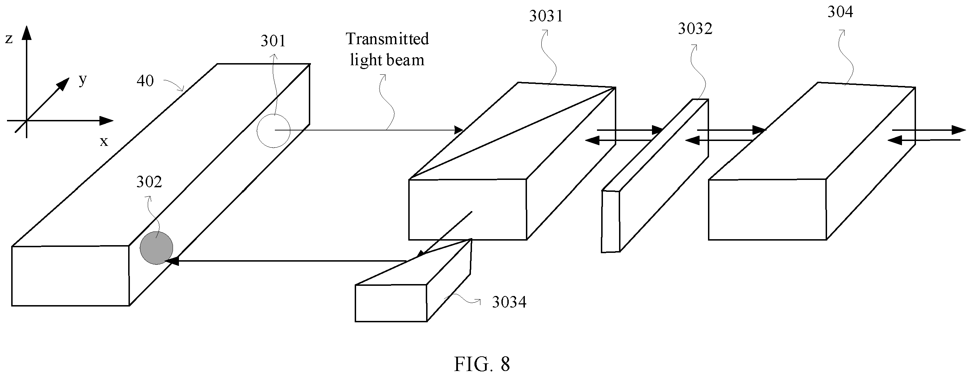

FIG. 8 is a diagram of another optical module according to an embodiment of this application. The light beam processing module includes a PBS 3031, a QWP 3032, and a turning mirror 3034. For most of the modules, refer to related descriptions in FIG. 7. The turning mirror 3034 may turn a returned light beam transmitted from the PBS, so that a propagation direction of the returned light beam is changed and the returned light beam is propagated to the receive port 302. In this case, the transmit port and the receive port may be integrated into a same module (for example, in the waveguide chip 40). Certainly, in this case, the transmit port and the receive port may be not integrated into a same module. For example, the first waveguide chip 401 and the second waveguide chip 402 shown in FIG. 6 may replace the waveguide chip 40 in FIG. 8. Optionally, the turning mirror 3034 may be implemented by using a reflector, or may be implemented by plating a reflective film in a prism.

It should be understood that an HWP may also be disposed in the structure shown in FIG. 8, for example, disposed between the PBS 3031 and the turning mirror 3034. Alternatively, in the foregoing implementation, the QWP may be replaced with two 1/8 wave plates. Alternatively, the QWP may be replaced with one QWP and one HWP.

**The following describes the beam expansion module 304 in the optical module shown in** **FIG. 3****.** The beam expansion module 304 may be implemented by using a telescope beam expansion system. For example, the beam expansion module includes a front group of lenses and a rear group of lenses, and the rear group of lenses indicates lenses closer to object space on an optical path. The front group of lenses and the rear group of lenses each may be implemented by using a single lens, or each may be implemented by using a lens group, or may be partially implemented by using a single lens and partially implemented by using a combination of lenses. Further, the front group of lenses and the rear group of lenses are connected by using a focal plane. The focal plane herein may be a real focal plane or a virtual focal plane. For example, the front group of lenses and the rear group of lenses each include a front focal plane and a rear focal plane, and the rear focal plane is a focal plane closer to object space on an optical path. In some solutions, the front group of lenses is configured to converge incident light beams on the rear focal plane of the front group of lenses, and the rear group of lenses collimates light beams on the front focal plane of the rear group of lenses. For example, a focal length of the front group of lenses is f1, a focal length of the rear group of lenses is f2, and a beam expansion ratio of the beam expansion module 304 may be expressed as N=f2/f1. In some solutions, the detection apparatus requires a diameter of an emergent light spot to be d2. In this case, a diameter d1 of a transmitted light beam passing through the light beam processing module needs to meet: d1=d2/N.

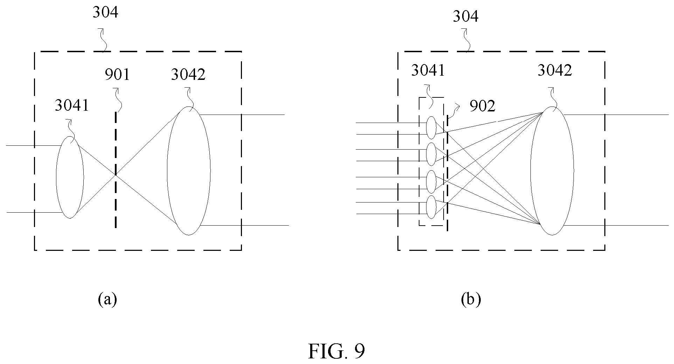

FIG. 9 is a diagram of two beam expansion modules according to an embodiment of this application. In a part (a) of FIG. 9, the first lens group 3401 is implemented by using one lens, and the second lens group 3402 is also implemented by using one lens. The first lens group 3401 and the second lens group 3402 have a common focal plane 901. Optionally, the common focal plane 901 between the first lens group and the second lens group may be a real focal plane or a virtual focal plane. A focal length of the first lens group 3401 may be less than a focal length of the second lens group 3402. In a part (b) of FIG. 9, the first lens group 3401 is implemented by using a plurality of lenses, and the second lens group 3402 is also implemented by using one lens. A focal length of each lens in the first lens group 3401 is less than a focal length of the second lens group 3402, and the first lens group 3401 and the second lens group 3402 have a common focal plane 902. Optionally, the common focal plane 902 between the first lens group and the second lens group may be a real focal plane or a virtual focal plane. It can be learned with reference to FIG. 9 that a diameter of an emergent light beam may be increased by using the beam expansion system, to meet requirements for large-diameter light transmission and light reception, thereby ensuring detection performance.

Optionally, the N transmitted light beams incident to the first lens group 3401 may be converged light beams (described below).

**In another possible implementation,** the optical module 30 may further include a scanning module. The scanning module is configured to: scan, into the object space, the N transmitted light beams that pass through the beam expansion module, and propagate, to the beam expansion module, the returned light beams of the N transmitted light beams from the object space. Herein, "scan into the object space" means that the N transmitted light beams are propagated to the object space at different angles through motion. Specifically, a scanning manner of the scanning module may be one-dimensional, or may be two-dimensional. The scanning manner, an apparatus implementing scanning, and the like are not limited in this application. For example, the scanning apparatus may implement one-dimensional or two-dimensional scanning by using an apparatus, for example, a galvanometer scanner, a rotator mirror (Polygon), a micro-electro-mechanical system (Micro-Electro-Mechanical System, MEMS) mirror, or a metal oscillating mirror.

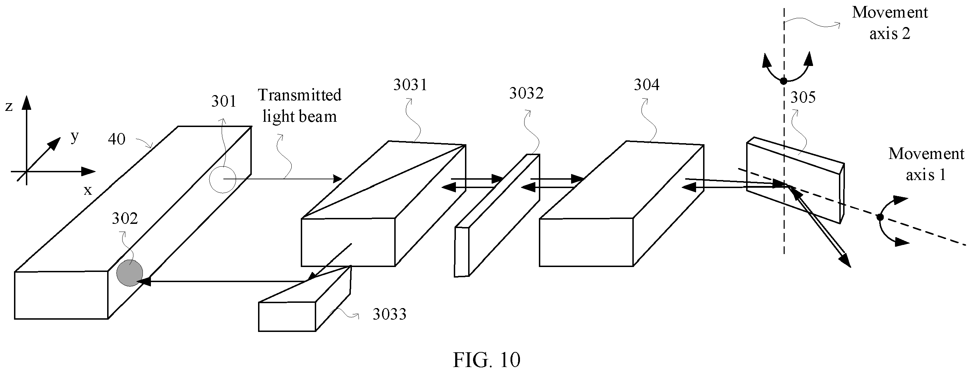

FIG. 10 is a diagram of a structure of another optical module according to an embodiment of this application. The optical module 30 shown in FIG. 10 may include a scanning module (or referred to as a scanner) 305. The scanning module 305 may move to form a plurality of angles, to propagate the N transmitted light beams to the object space at different angles. Certainly, the returned light beams are also propagated to the beam expansion module by using the scanning module.

Optionally, when N=1, there may be a plurality of possible designs for the scanning direction of the scanning module. As shown in FIG. 10, a movement axis of the scanning module may be perpendicular to a z axis, for example, the movement axis 1 shown in FIG. 10. In this case, the scanning direction is a direction perpendicular to the movement axis, that is, rotation or swing around the movement axis. Alternatively, a movement axis of the scanning module may be parallel to a z axis, for example, a movement axis 2 shown in FIG. 10. It should be noted that when scanning of the scanning module is 2D scanning, the foregoing scanning direction may be a fast axis direction of the scanning module.

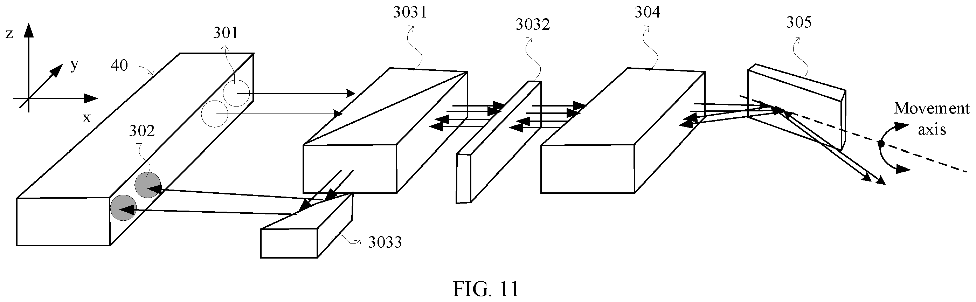

Optionally, when N>1, because the N transmitted light beams form a plurality of channels in an arrangement direction, the scanning direction of the scanning module 305 is usually not parallel to the arrangement direction of the N light beams. FIG. 11 is a diagram of a structure of another optical module according to an embodiment of this application. For example, N=2. Transmitted light beams of two channels are arranged along a y direction, and a light beam propagation plane is parallel to an X-Y plane. In this case, a movement axis of the scanning module 305 is usually perpendicular to a z direction, and the scanning module swings or rotates around a z axis. For example, the scanning direction of the scanning module is perpendicular to the arrangement direction of the N transmitted light beams. For example, when a plurality of channels are horizontally arranged (that is, the plurality of channels are arranged into at least one row), the scanning module needs to move vertically, so that the plurality of channels scan the object space in a "line scanning" form.

In the optical module 30 including the scanning module 305, if the scanning module is inactive (or is in a stationary state), main optical axes of the N returned light beams after passing through the scanning module 305 and the N transmitted light beams before passing through the scanning module 305 are parallel or even collinear. In this case, the N returned light beams may be referred to as ideally returned light beams. However, when the scanning module works normally, the scanning module moves by an angle, so that the N returned light beams are no longer propagated along directions of the ideally returned light beams (that is, a direction parallel to the N transmitted light beams) but a specific deviation angle, that is, a walk-off (walk off) angle exists. It is not difficult to learn that an angle direction of the walk-off angle is the same as the scanning direction of the scanning module. Because a region (referred to as an effective reception region for short) in which a receive port can receive light is limited, especially for a receive port with a relatively small mode spot area and a relatively small clear aperture such as an optical fiber or a waveguide, a walk-off angle of a light beam severely affects a loss of a returned light beam in a receiving process.

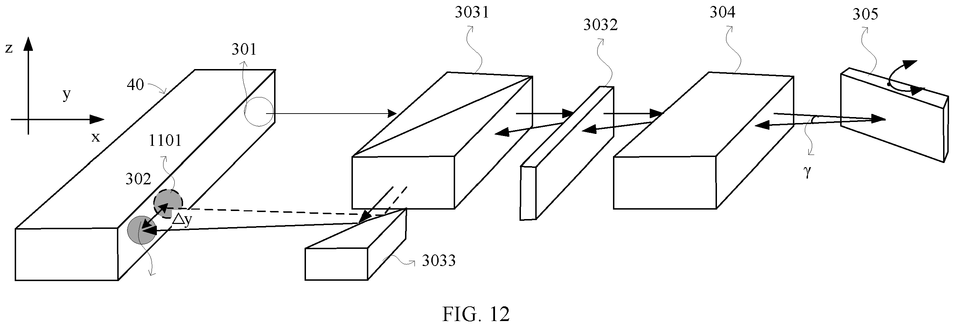

FIG. 12 is a diagram of a walk-off angle according to an embodiment of this application. For example, N=1, and a scanning direction of a scanner is a y direction (perpendicular to a z-axis direction and a direction in which a transmitted light beam is incident to the scanning module 305). Because the scanner continuously performs scanning, a walk-off angle γ exists between the N returned light beams and the ideally returned light beams. When the scanner moves, a first included angle is greater than 0° and less than 90°, that is, 0°<γ<90°. The existence of the walk-off angle γ causes deviation between optical paths (shown by using dashed lines) of ideally returned light beams and optical paths of the N returned light beams, where a deviation direction is the y direction. In some solutions, a location of a receive port deviates relative to a light spot location of an ideally returned light beam, to compensate for deviation caused by the walk-off angles of the N returned light beams. With reference to FIG. 12, a light spot of an ideally received light beam arriving at the waveguide chip 40 is represented by a region 1101. However, a location of the receive port 302 deviates relative to the region 1101, for example, deviation Δ*y* in the y direction. In this way, deviation of the N returned light beams can be compensated, so that a light spot of a first returned light beam can be closer to an effective reception region of the receive port 302 or even coincide with a center of the effective reception region of the receive port 302. In this way, the receive port 302 can receive the first returned light beam more accurately, thereby improving effectiveness of the received echo signal and improving detection performance.

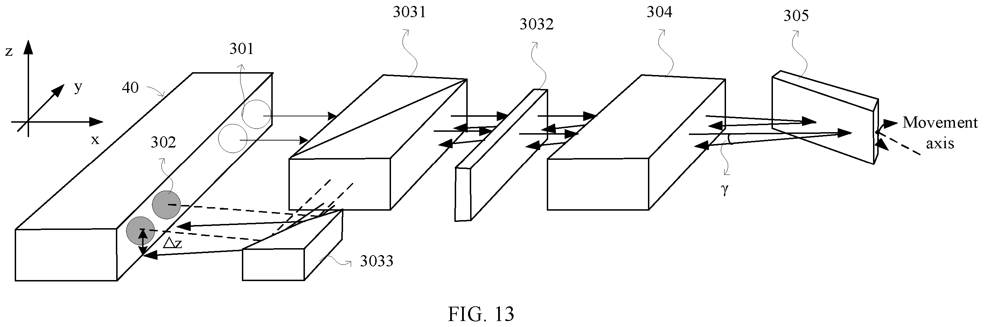

In some scenarios, because the scanning direction is different from the arrangement direction of the N light beams, a walk-off angle direction is also different from the arrangement direction of the N returned light beams. FIG. 13 is another diagram of a walk-off angle according to an embodiment of this application. In FIG. 13, a plurality of transmit ports may transmit a plurality of channels of light beams. For example, N=2, and a scanning direction of a scanner is a z direction. Because the scanner continuously performs scanning, a walk-off angle γ exists between the N returned light beams and the ideally returned light beams. The walk-off angle γ indicates deviation between the N returned light beams and the ideally returned light beams in the z direction. However, the arrangement direction of the N light beams is a y direction. Therefore, a walk-off angle direction is inconsistent with or even perpendicular to (that is, the walk-off direction is the z direction) the arrangement direction of the N light beams. When the N returned light beams are propagated to the N receive ports, if the receive ports 302 are disposed at light spot locations at which the ideally returned light beams arrive at the receive ports, the existence of the walk-off angle causes deviation between light spot locations at which the N light beams arrive at the receive ports 302 and the light spot locations at which the ideally returned light beams arrive at the receive ports 302. When a walk-off angle direction is the z direction, deviation Δ*z* exists in the z direction between the light spot locations at which the N returned light beams arrive at the receive ports 302 and the light spot locations at which the ideally returned light beams arrive at the receive ports 302. In this case, light spots of the returned light beams cannot be accurately received by the receive ports 302. Consequently, a large loss is generated on the light beams received by the receive ports, which severely affects detection accuracy. Further, an amplitude of the walk-off angle is positively correlated with a detection distance and a scanning speed of the scanning module. It may be understood that, when a target in object space is relatively far away from the light beam module, the amplitude of the walk-off angle is relatively large; or when a target in object space is relatively close to the light beam module, the walk-off angle is relatively small.

In some solutions, locations of the receive ports may deviate in the z direction, to compensate for light spot deviation caused by the walk-off angle and reduce a signal loss caused by the walk-off angle.

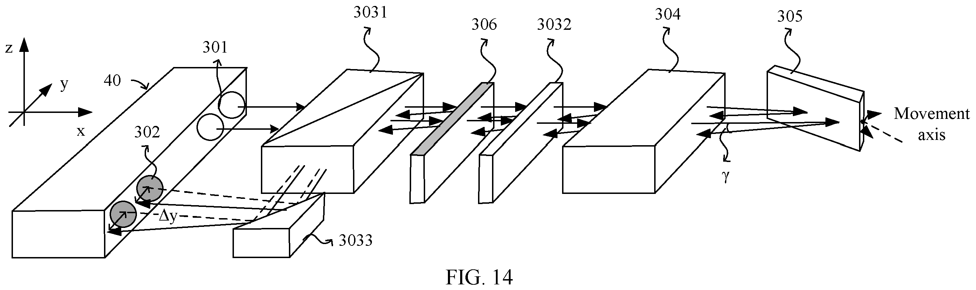

However, in some cases, when the N receive ports are arranged along the first direction, it may be difficult for the N receive ports to support a deviation design of the N receive ports in another direction (especially a thickness direction). In other words, it is difficult to support deviation in the z direction. As a result, the deviation caused by the walk-off angle cannot be compensated, and a light beam has a relatively high loss in a receiving process, which affects detection performance. In a possible implementation, the optical module 30 may further include a light spot reorientation mechanism. The light spot reorientation mechanism can adjust walk-off angles of the N returned light beams to the arrangement direction of the N light beams. With reference to FIG. 14 and the like, the following describes the optical module including the light spot reorientation mechanism.

FIG. 14 is a diagram of a structure of another optical module according to this application. The optical module 30 may include a light spot reorientation mechanism 306. The light spot reorientation mechanism 306 is configured to: turn a walk-off angle direction of each of the N returned light beams into the arrangement direction of the N returned light beams. As shown in FIG. 14, before the N returned light beams pass through the light spot reorientation mechanism 306, the existence of the walk-off angle γ causes deviation between the N returned light beams and the ideally returned light beams in the z direction. After the N returned light beams pass through the light spot reorientation mechanism 306, directions of the walk-off angles of the N returned light beams are converted to the arrangement direction of the N light beams. After the directions of the walk-off angles are adjusted to the arrangement direction of the N returned light beams, angle deviation caused by the walk-of angles of the N returned light beams may be compensated by performing displacement in the arrangement direction of the N receive ports, to help reduce a signal loss caused by the walk-off angle and improve signal effectiveness.

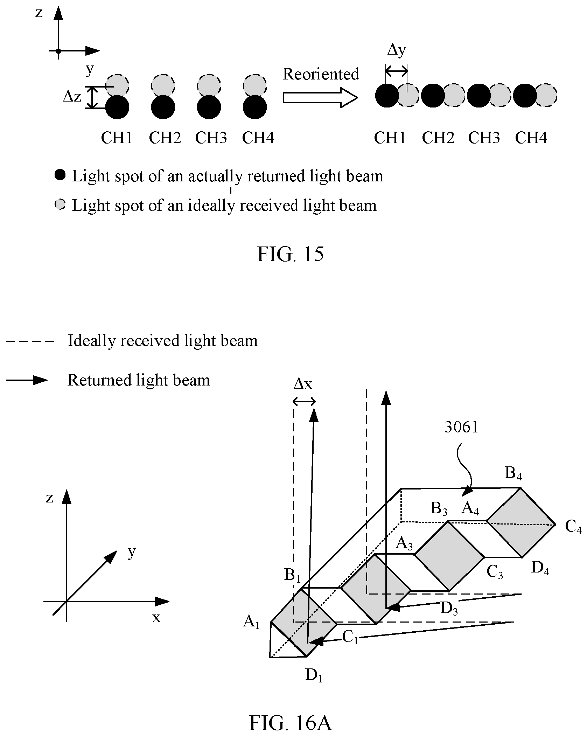

FIG. 15 is a diagram of effect of light spot reorientation according to an embodiment of this application. A plurality of channels of returned light beams are arranged along a first axis, and a scanner performs scanning along a second axis. Walk-off directions of the returned light beams are consistent with a scanning direction of the scanner. Therefore, the walk-off directions of the returned light beams are inconsistent with or even perpendicular to an arrangement direction of the plurality of channels. As shown in FIG. 15, a solid circle represents a light spot of a returned light beam, and a dashed-line circle represents a light spot of a returned light beam in an ideal case (or a light spot of a transmitted light beam on a coaxial optical path). The returned light beams include 4 channels, denoted CH1 to CH4, respectively. An arrangement direction of the four channels of returned light beams is a y-axis direction, and the walk-off directions are a z-axis direction. Therefore, the walk-off directions are the z-axis direction. After light spot reorientation, the arrangement direction of the returned light beams is still the y-axis direction, but a light spot of each channel is rotated by a specific angle, so that the walk-off directions of the returned light beams are also the y-axis direction, that is, the walk-off directions of the returned light beams are consistent with the arrangement direction of the plurality of channels.

In some solutions, the receive ports are implemented by using waveguides, optical fibers, or the like. For example, the N receive ports are implemented by using N waveguides. The arrangement direction of the N returned light beams is consistent with an arrangement direction of the N waveguides. With reference to FIG. 14, because the N receive ports are also arranged along a y axis, in a waveguide process, it is convenient to implement deviation for the N receive ports along the y axis in a design. Therefore, displacement may be performed in the arrangement direction of the N receive ports 302, to compensate for light beam losses caused by the walk-off angles, thereby reducing signal losses caused by the walk-off angles and improving signal effectiveness. For related descriptions, refer to descriptions about the deviation of the receive ports 302 in related descriptions in FIG. 12.

It should be understood that the structure shown in FIG. 14 may also be implemented in a single-channel case, and specific cases are not described herein one by one.

The foregoing mentions the light spot reorientation mechanism and the effect thereof. The following describes an example of possible implementation of the light spot reorientation mechanism. The light spot reorientation mechanism 306 may include one or more stepped reflectors. The stepped reflector includes N reflective surfaces that are disposed in a stepped manner. A stepped design manner may be as follows: The N reflective surfaces are sequentially arranged along a specific direction, and are spaced in another direction, to form steps. Each reflective surface is configured to reflect one of the N returned light beams, and may be further configured to reflect one of the N transmitted light beams.

FIG. 16A is a diagram of a structure of a stepped reflector according to an embodiment of this application. A first stepped reflector 3061 includes four reflective surfaces that are respectively represented as a reflective surface *A*₁*B*₁*C*₁*D*₁, a reflective surface *A*₃*B*₃*C*₃*D*₃*,* a reflective surface *A*₄*B*₄*C*₄*D*₄, and the like. The reflective surface *A*₁*B*₁*C*₁*D*₁ is configured to reflect a returned light beam. With reference to FIG. 16A, it can be learned that the four reflective surfaces are sequentially arranged along a y direction (that is, an arrangement direction of light beams), the four first reflective surfaces are spaced at a specific interval along an x direction (that is, a propagation direction of N light beams), and the four reflective surfaces are at a same location in a z direction. An optical path of a returned light beam is used as an example. When a walk-off angle of the returned light beam is in the z direction, after the returned light beam passes through the stepped reflector, a walk-off angle direction is rotated by 90 degrees, that is, along the x direction.

Optionally, in FIG. 16A, the reflective surfaces in the stepped reflector intersect with a light beam plane (that is, a plane formed by a propagation direction and an arrangement direction) formed by the N returned received light beams, and further, the reflective surfaces are neither parallel to nor perpendicular to the light beam plane. Further, included angles between a bottom surface of the stepped reflector and the reflective surfaces are 45°, or included angles between a light beam plane (that is, an XY plane) of ideally received light beams and the reflective surfaces of the stepped reflector are 45°. In this case, the N reflective surfaces in the stepped reflector are parallel to each other.

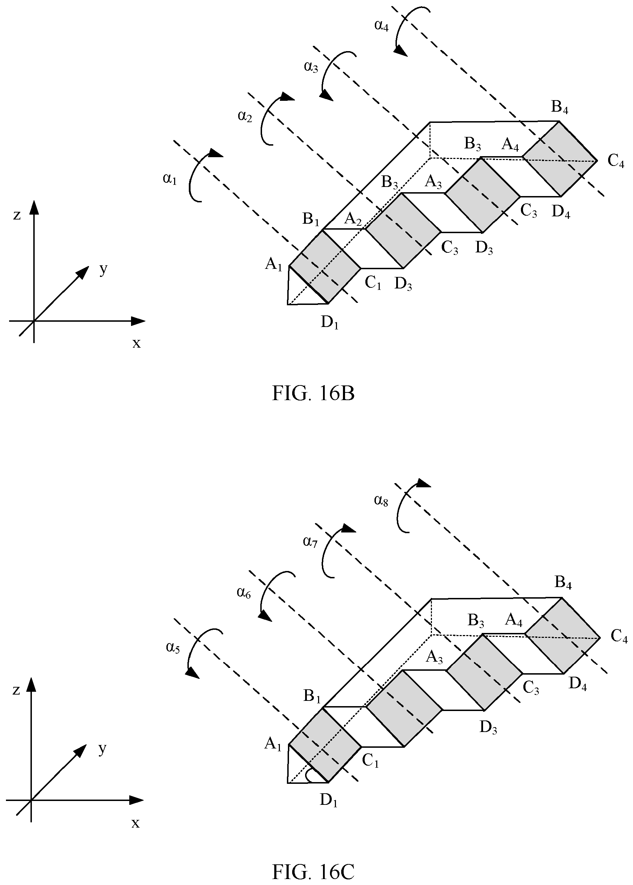

Optionally, the N reflective surfaces may be not parallel. For example, the reflective surfaces in the stepped reflector intersect with the light beam plane (that is, the plane formed by the propagation direction and the arrangement direction) formed by the N returned received light beams, and included angles between the bottom surface and the reflective surfaces increase from a step center to a step edge reflective surface. In other words, the reflective surfaces on a plurality of steps deflect inwards relative to the step center, so that the plurality of reflective surfaces are in an inwardly converged state. FIG. 16B is a diagram of a structure of another stepped reflector according to an embodiment of this application. For example, N=4, and included angles between a bottom surface and a reflective surface *A*₁*B*₁*C*₁*D*₁, a reflective surface A₂B₂C₂D₂, a reflective surface *A*₃*B*₃*C*₃*D*₃*,* and a reflective surface *A*₄*B*₄*C*₄*D*₄ of the first stepped reflector 3061, that is, an XY plane in FIG. 16B gradually increase from a step center to a step edge. In other words, the included angle between the reflective surface *A*₁*B*₁*C*₁*D*₁ and the bottom surface is greater than the included angle between the reflective surface *A*₂*B*₂*C*₂*D*₂ and the bottom surface, and the included angle between the reflective surface *A*₄*B*₄*C*₄*D*₄ and the bottom surface is greater than the included angle between the reflective surface *A*₃*B*₃*C*₃*D*₃ and the bottom surface.

Optionally, the included angles between the bottom surface and the plurality of reflective surfaces are all greater than, or greater than or equal to 45°. In some solutions, the N non-parallel reflective surfaces may be considered as four reflective surfaces that are originally at an included angle of 45° with the bottom surface, and be sequentially rotated by the following angles: α₁, α₂, α₃, and α₄ along a rotation axis to the step center. The rotation axis is an axis at 45° with the light beam plane (that is, the XY plane) of the ideally received light beam. Further, optionally, the rotation angles gradually increase from the step inner side to the step outer side. For example, α₁, α₂, α₃, and α₄ may be 9°, 3°, 3°, and 9° respectively. There may be another design in a specific implementation process. It should be noted that this is design implementation for understanding the reflective surface. Therefore, a state of the reflective surface is described in a rotation manner, and this does not indicate that the reflective surface can be rotated in a use process. The stepped reflector shown in FIG. 16B can change direction angles of a plurality of light beams that pass through the stepped reflector, and four parallel incident light beams are converged after passing through the stepped reflector.

It should be understood that a design of the N reflective surfaces shown in FIG. 16B are merely an example, and there may be other designs in some solutions. For example, FIG. 16C is a diagram of a structure of another stepped reflector according to an embodiment of this application. N non-parallel reflective surfaces are considered as four reflective surfaces that are originally at an included angle of 45° with a bottom surface, and are sequentially rotated to the step outer side by the following angles: α₄, α₅, α₆, and α₇ along rotation axes. The rotation axis is an axis at 45° with a light beam plane (that is, an XY plane) of an ideally received light beam. Further, optionally, the rotation angles gradually increase from the step inner side to the step outer side. The stepped reflector shown in FIG. 16C can change direction angles of a plurality of light beams that pass through the stepped reflector, and four parallel incident light beams are diverged after passing through the stepped reflector.

In some possible implementations, the light spot reorientation mechanism may include a stepped reflector and a turning mirror. When the optical module 30 includes the PBS 3031 and the beam expansion module 304, the light spot reorientation structure may be located between the beam expansion module 304 and the PBS 3031. The front group of lenses (for example, a first lens group 3041) of the beam expansion module includes a microlens array (that is, includes a plurality of lenses) disposed in a stepped manner. The TX port, the reflective surface of the stepped reflector, and a microlens are in a one-to-one correspondence. Further, the TX port, the reflective surface of the stepped reflector, the microlens, and the RX port are in a one-to-one correspondence.

In some other possible implementations, the light spot reorientation mechanism may include a plurality of stepped reflectors, and the plurality of stepped reflectors may be disposed opposite to each other, to rotate a walk-off angle direction twice.

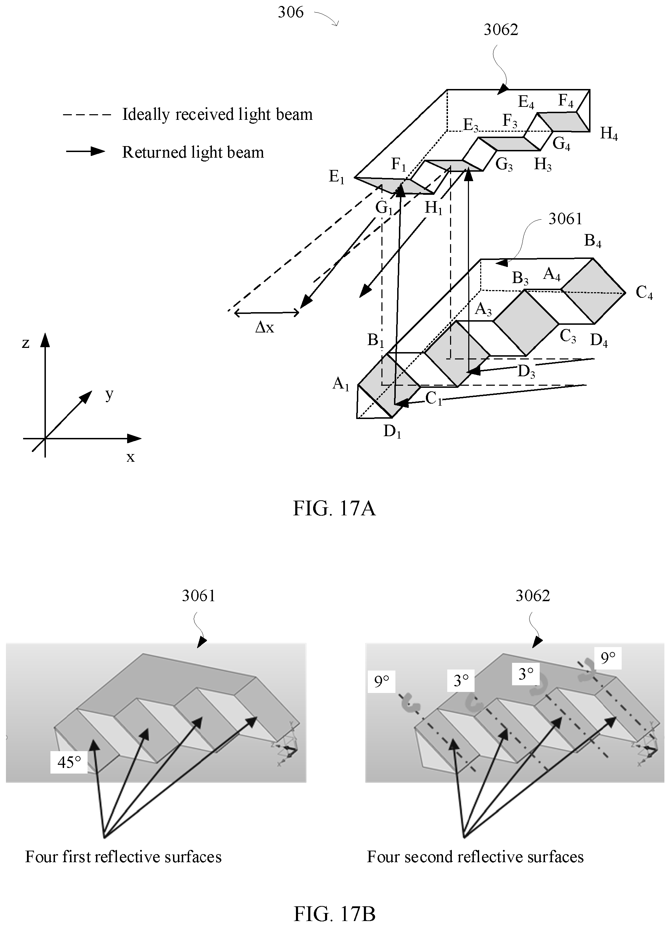

FIG. 17A is a diagram of a structure of another light spot reorientation mechanism according to an embodiment of this application. The light spot reorientation mechanism 306 includes two groups of stepped reflectors that are disposed opposite to each other. For ease of differentiation, the two groups of stepped reflectors are referred to as a first stepped reflector 3061 and a second stepped reflector 3062. Each group stepped reflector includes a plurality of reflective surfaces disposed in a stepped manner, and one reflective surface may be configured to turn a returned light beam. The first stepped reflector 3061 includes four first reflective surfaces, for example, a first reflective surface *A*₁*B*₁*C*₁*D*₁, a first reflective surface *A*₃*B*₃*C*₃*D*₃*,* and a first reflective surface *A*₄*B*₄*C*₄*D*₄. The four first reflective surfaces are sequentially arranged along a negative y-axis direction (that is, an arrangement direction of returned light beams), and are spaced at a specific interval in an x direction (that is, a propagation direction of a returned light beam). One first reflective surface is configured to turn one returned light beam. The second stepped reflector 3062 includes four second reflective surfaces, for example, a second reflective surface *E*₁*F*₁*G*₁*H*₁, a second reflective surface *E*₃*F*₃*G*₃*H*₃, and a second reflective surface *E*₄*F*₄*G*₄*H*₄. The four second reflective surfaces are sequentially arranged along the x direction (that is, the propagation direction of the returned light beam before passing through the first stepped reflector 3061), and are spaced at a specific interval in a y direction (that is, the arrangement direction of the returned light beams before passing through the first stepped reflector 3061). One second reflective surface is configured to turn one returned light beam.

With reference to FIG. 17A, it can be learned that each first reflective surface in the first stepped reflector 3061 is configured to turn one of the N returned light beams and propagate the returned light beam to one of the N second reflective surfaces, and each of the N second reflective surfaces is configured to turn one of the N returned light beams, so that walk-off angle directions of the N returned light beams are the arrangement direction of the N returned light beams. With reference to FIG. 16B, after the light beams pass through the light spot reorientation mechanism 306, the walk-off angle directions of the light beams are turned to the x direction. In this case, the N returned light beams are also arranged in the x direction, and light beam deviation caused by the walk-off angle is also deviation Δ*x* in the x direction.

In some possible implementations, the light spot reorientation mechanism 306 is further configured to adjust direction angles of the N light beams that pass through the light spot reorientation mechanism, for example, adjust direction angles of N transmitted light beams and/or N received light beams that pass through the light spot reorientation mechanism. For example, the light spot reorientation mechanism 306 includes one or more stepped reflectors shown in FIG. 16B or FIG. 16C.

FIG. 17B is a diagram of a structure of another light spot reorientation mechanism according to an embodiment of this application. An angle of a first-group 1*4 stepped reflector 3601 is 45°, and an angle of at least one surface is different from an angle of another reflective surface in a second-group 1*4 stepped reflector 3602. For example, the 1*4 stepped reflector deflects inward at angles, and the deflection angles gradually increase from a step center to a step outer side. For example, two outermost reflective surfaces deflect by 9°, and an inner reflective surface deflects by 3°, to implement different directions of light beams.

In some possible implementations, the stepped reflector, such as the first stepped reflector 3061 shown in FIG. 16A, FIG. 16B, or FIG. 16C, and the first stepped reflector 3061 and the second stepped reflector 3062 shown in FIG. 17A or FIG. 17B, includes a substrate and N reflectors. The N reflectors are attached to the substrate. Each reflector is configured to provide a reflective surface. For example, the first stepped reflector 3061 includes a first substrate and N first reflectors. The N first reflectors are attached to the first substrate. Each first reflector includes one first reflective surface. The second stepped reflector includes a second substrate and N second reflectors. The N second reflectors are attached to the second substrate. Each second reflector includes one second reflective surface.

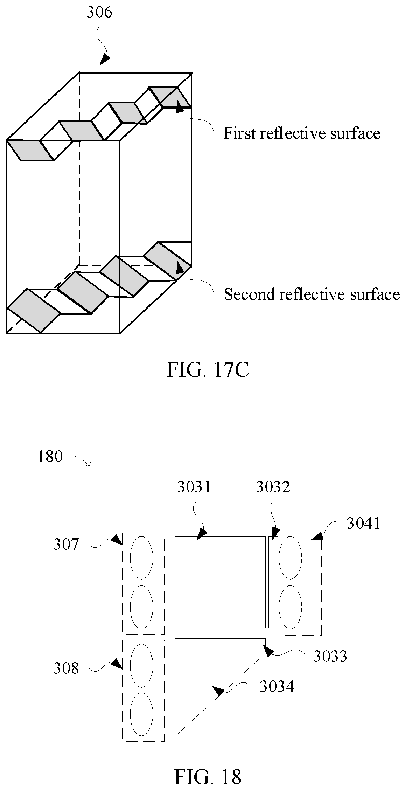

In some possible implementations, the light spot reorientation mechanism is a prism, and the N first reflective surfaces and the N second reflective surfaces are implemented by plating a reflective film in the prism. FIG. 17C is a diagram of a structure of another light spot reorientation mechanism according to an embodiment of this application. The light spot reorientation mechanism 306 is a prism, and includes a plurality of reflective surfaces implemented in a plating manner, for example, four first reflective surfaces and four second reflective surfaces. For a location relationship between reflective surfaces, refer to the related descriptions in FIG. 17A.

In some possible implementations, a plurality of possible designs are implemented for a location of the light spot reorientation mechanism. The location shown in FIG. 14 is merely an example. For example, the light spot reorientation mechanism may be further disposed on an optical path after a returned light beam passes through a PBS, that is, at a location between the PBS and the receive port. For another example, when the beam expansion module includes the first lens group and the second lens group, the light spot reorientation mechanism may be further disposed between the first lens group and the second lens group.

**The following further describes components included in the optical module provided in embodiments of this application.** In some possible implementations, the optical module 30 further includes a transmit lens group and a receive lens group. The transmit lens group is disposed between the light beam processing module and the N transmit ports, and the receive lens group is disposed between the light beam processing module and the N receive ports. Further, the transmit lens group and/or the receive lens group may also be included in the light beam processing module.

Optionally, the transmit lens group may include one or more lenses. For example, when there are a plurality of transmit ports, the transmit lens group may be implemented by using a plurality of lenses, and each lens corresponds to one transmit port. In some solutions, the transmit lens group may be a microlens array. For another example, one lens may correspond to at least one of a plurality of transmit ports. For example, light beams transmitted by the N transmit ports are collimated by using one lens.

Similarly, the transmit lens group may include one or more lenses. For example, when there are a plurality of receive ports, the receive lens group may be implemented by using a plurality of lenses, and each lens corresponds to one receive port. In some solutions, the receive lens group may be a microlens array. For another example, one lens may correspond to at least one of a plurality of receive ports. For example, light beams received by the N receive ports are collimated by using one lens.

**The following describes an example of a package design of the optical module in embodiments of this application.** In some possible implementations, the transmit port, the transmit lens group, the receive port, the receive lens group, and the light beam processing module are packaged as a first optical assembly, and the beam expansion module is packaged as a second optical assembly. Light transmissive windows are disposed on the first optical assembly and the second optical assembly. The light transmissive windows are configured to transmit the N transmitted light beams and the N returned light beams.

Optionally, the transmit lens group, the receive lens group, and the light beam processing module may be packaged as a transceiver module as an entire structure. FIG. 18 is a diagram of a structure of a transceiver module according to an embodiment of this application. The transceiver module 180 may include a transmit lens group 307, a receive lens group 308, a PBS 3031, a QWP 3032, an HWP 3033, and a turning mirror 3034. In this way, coaxiality and collimation of transmission and reception may be implemented by using an integrated lens-and-prism combination solution, to further reduce an overall volume of a detection apparatus.

In a possible implementation, the first optical assembly includes a transmit port, a receive port, and a transceiver module. The transmit port and the receive port may be replaced with a waveguide chip that includes the transmit port and the receive port.

Alternatively, optionally, the transmit lens group, the receive lens group, the light beam processing module, and the beam expansion module may be packaged as a transceiver module as an entire structure. As shown in FIG. 18, the transceiver module may optionally include the first lens group 3041 in the beam expansion module 304. In another possible implementation, the first optical assembly includes a transmit port, a receive port, and a transceiver module. The rear group of the beam expansion module is packaged as the second optical assembly.

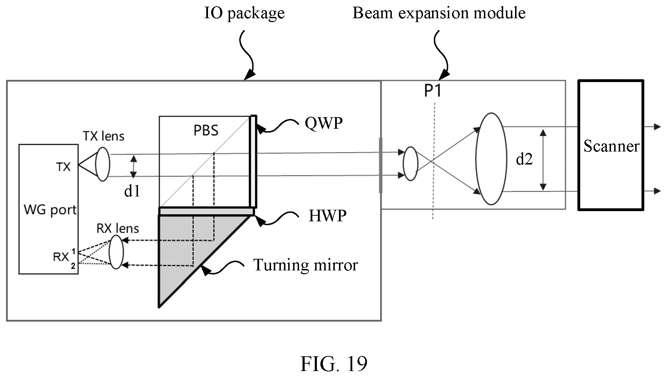

A plurality of possible solutions are mentioned above. The following further describes some possible designs of this solution with reference to FIG. 19 to FIG. 24. It should be understood that the plurality of possible designs and the possible implementations shown in this application may be combined.

FIG. 19 is a diagram of a structure of another optical module according to an embodiment of this application. The transmit port and the receive port are disposed on a waveguide (waveguide, WG) chip. In other words, waveguide ports (WG ports) include the transmit (TX) port and the receive (RX) port. As shown in FIG. 19, both the transmit port and the receive port are disposed on a right side face of the waveguide chip. The light beam processing module includes a PBS, a QWP, an HWP, and a turning mirror, and optionally further includes a transmit lens group (TX lens) and a receive lens group (RX lens). The beam expansion module includes a front group of lenses and a rear group of lenses, and the front group of lenses and the rear group of lenses are connected by using a focal plane P1.

During transmission, a light beam transmitted from the transmit port arrives at a scanner through the TX lens, the PBS, the QWP, and the beam expansion module, and is scanned into object space by the scanner. A returned light beam from the object space arrives at the receive port through the scanner, the beam expansion module, the QWP, the PBS, the HWP, the turning mirror, and the RX lens. However, returned light beams of a short-range target are reflected and converged at a location 1. Because returned light beams of a long-range target correspond to relatively long times of flight, walk-off angles are relatively large. Therefore, the returned light beam of the long-range target are converged at a location 2. Further, a span between the location 1 and the location 2 corresponds to a size of a waveguide mode spot along a walk-off direction.

In some possible designs, an element in the optical module may be packaged, to further improve integration and stability of the component. The waveguide chip, the TX lens, the RX lens, a PBS polarization beam splitter module (including a PBS element, a QWP, and an HWP), and the turning mirror may be packaged as a first optical assembly that is also referred to as a first-level optical system, that is, an I/O package (IO package) shown in FIG. 19. The front group of lenses and the rear group of lenses in the beam expansion (beam expansion) module are packaged as a whole to form a second optical assembly that is also referred to as a second-level optical system. A light transmissive window (for example, implemented by disposing a window slice) exists between the first-level optical system and the second-level optical system. In this case, because the first-level system includes a waveguide chip and a small-sized optical element, it is more convenient to perform housing packaging and implement a better coefficient of thermal expansion (Coefficient of thermal expansion, CTE) matching design, thereby improving integration and stability. The second-level system may be considered as a beam expansion lens group, and is installed as a whole with the first-level optical system, to improve overall stability of the optical module and decouple from the first-level optical system.

In packaging of the two levels of optical systems, during transmission, light enters the second-level optical system from the first-level optical system. After the second-level optical system further expands light beams to meet a design requirement, the light is transmitted from the second-level optical system of the optical module. During reception, light enters from the second-level optical system, and the beam expansion module is configured to perform beam reduction on received light beams. The returned light beams obtained through beam reduction performed by the beam expansion module enters the first-level optical system through an optical window, and is coupled into the waveguide chip after passing through the PBS module, the turning mirror, and the RX lens in the first-level optical system.

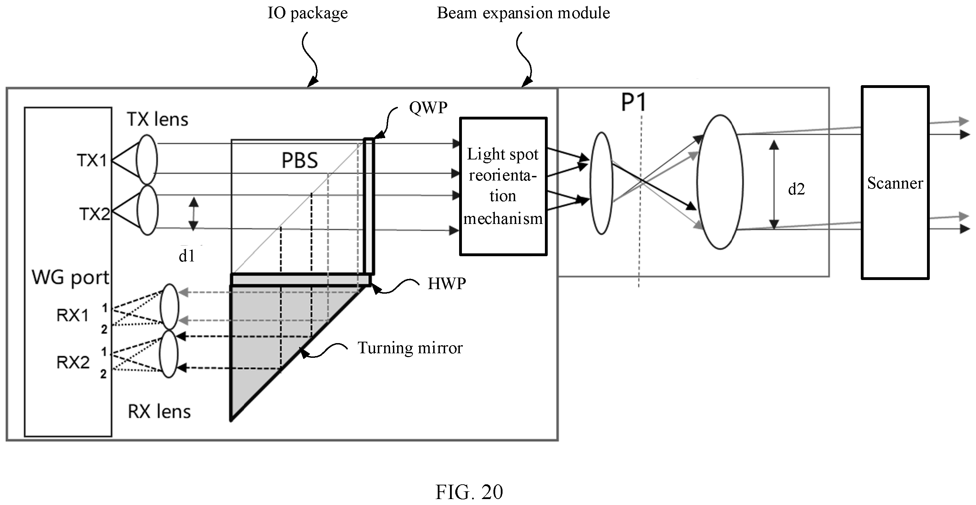

FIG. 20 is a diagram of a structure of another optical module according to an embodiment of this application. A difference from FIG. 19 lies in that ports of a waveguide chip include a plurality of transmit ports and a plurality of receive ports, and the optical module includes a light spot reorientation mechanism. Because the ports of the waveguide chip include a plurality of transmit ports and a plurality of receive ports, a transmitted light beam and a returned light beam each are a multi-channel light beam. With reference to FIG. 20, a plurality of channels are arranged along a first axis, and a scanner performs scanning along a second axis. A walk-off direction is consistent with a scanning direction of the scanner. Therefore, the walk-off direction is inconsistent with the arrangement direction of the plurality of channels. As shown in FIG. 20, due to limitation of a waveguide process, the walk-off direction needs to be reorientated to a waveguide arrangement direction, and the walk-off direction may be adjusted to be consistent with the arrangement direction of the plurality of channels by using the light spot reorientation mechanism. Optionally, the light spot reorientation mechanism is further configured to change directions of a plurality of light beams that pass through the light spot reorientation mechanism, so that a plurality of channels of transmitted light beams are converged and then enter a beam expansion system.

In a possible optical path design, for example, the optical module includes four transmit ports and four receive ports. After four transmitted light beams transmitted by the four transmit ports are transmitted from the optical module, an included angle between adjacent light beams is 1.2° (that is, direction angles are 1.8°, 0.6°, -0.6°, and -1.8° respectively). For example, a spacing between the four transmit ports is 2.2 mm, a focal length of a TX lens is 0.5 mm, a focal length of an RX lens is 2.5 mm, and a distance between centers of two adjacent reflective surfaces of a stepped reflector is 2.2 mm. A front group of lenses of the beam expansion module is a 1*4 microlens array to implement light beam convergence, and a rear group of lenses is a collimation lens to implement beam expansion and pointing. For example, a focal length of the front group of lenses is 6.8 mm, and a focal length of the rear group of collimation lenses is 68 mm, to implement beam expansion at a ratio of 1:10. In the optical path design, a size of each optical element and a distance between light beams may be at a millimeter level, which significantly reduces an overall volume of a detection apparatus.

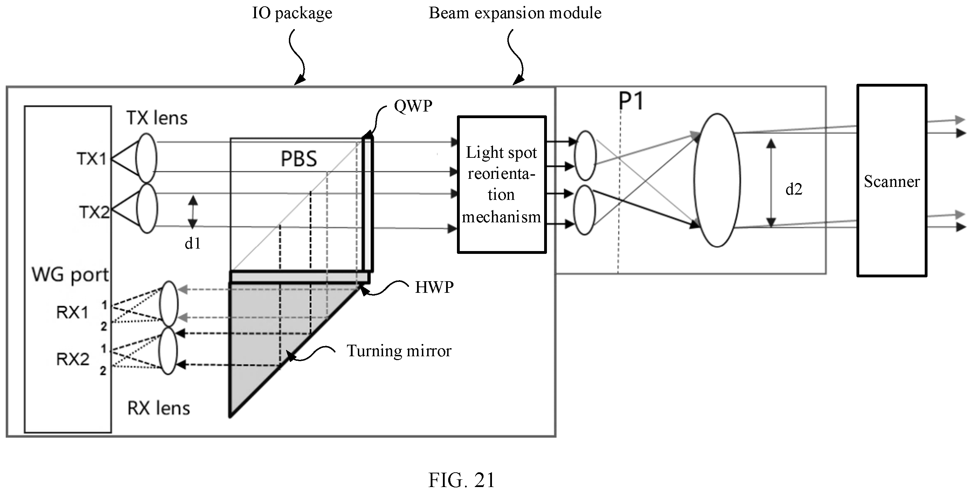

FIG. 21 is a diagram of a structure of another optical module according to an embodiment of this application. A difference from FIG. 18 lies in that waveguide ports include a plurality of transmit ports and a plurality of receive ports, and the optical module includes a light spot reorientation mechanism. A difference from FIG. 19 lies in that the front group of lenses (that is, lenses close to a PBS) in the beam expansion system may include a plurality of lenses, and the light spot orientation mechanism does not need to change directions of a plurality of light beams that pass through the light spot reorientation mechanism.

In some possible implementations, with reference to FIG. 21, the light spot reorientation mechanism may include a group stepped reflector, and the front group of the beam expansion module is a microlens array disposed in a stepped manner. A TX port, a reflective surface in the stepped reflector, and a microlens in the microlens array are in a one-to-one correspondence. Further, the TX port, the reflective surface in the stepped reflector, and the microlens in the microlens array, and an RX port are in a one-to-one correspondence. A transmitted light beam transmitted by one TX port is incident to one reflective surface of the stepped reflector, and enters one lens in the microlens array after being reflected. Correspondingly, one returned light beam passes through one lens in the microlens array, is incident to one reflective surface of the stepped reflector, and is received by one RX port after passing through the PBS and the like.

In another possible implementation, the light spot reorientation mechanism may include two stepped reflectors, and one of the two stepped reflectors is shown in FIG. 16B. In a possible optical path design, for example, the optical module includes four transmit ports and four receive ports. After four transmitted light beams transmitted by the four transmit ports are transmitted from the optical module, an included angle between adjacent light beams is 1.2° (that is, direction angles are 1.8°, 0.6°, -0.6°, and -1.8° respectively). For example, a spacing between the four transmit ports is 2.2 mm, a focal length of a TX lens is 1 mm, a focal length of an RX lens is 5 mm, and a distance between centers of two adjacent reflective surfaces of a stepped reflector is 2.2 mm. In the light spot reorientation mechanism, for a first-group 1*4 stepped reflector, included angles between a bottom surface and four surfaces are 45°; and for a second-group 1*4 stepped reflector, included angles between a bottom surface and four surfaces are 45°, and the four surfaces rotate by ±3° and ±9° relative to the movement axes shown in FIG. 16B. In this way, N transmitted light beams transmitted from a light beam module may be arranged to form a linear array. In the optical path design, a size of each optical element and a distance between light beams may be at a millimeter level, which significantly reduces an overall volume of a detection apparatus.

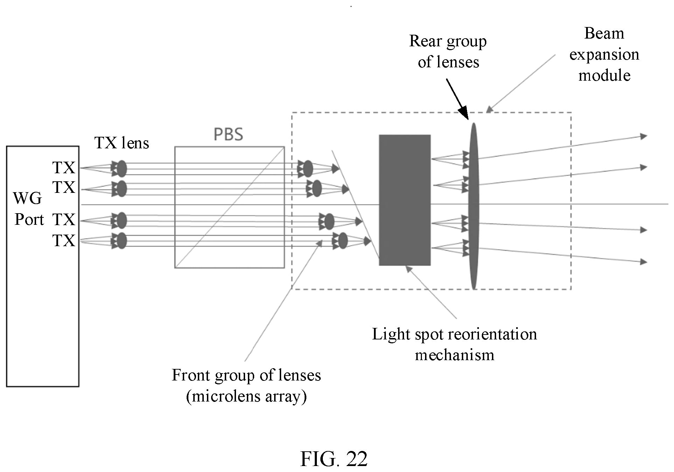

FIG. 22 is a diagram of transmit optical paths of another optical module according to an embodiment of this application. A difference from FIG. 19 to FIG. 21 lies in that the light spot reorientation mechanism is located inside the beam expansion module, and the front group of lenses in the beam expansion module is a microlens array. The microlens array may include a plurality of microlenses disposed in a stepped manner, to focus light beams that pass through the microlens array. The light spot reorientation mechanism may be configured to adjust a walk-off angle of a returned light beam. The rear group of lenses may increase a diameter of a transmitted light beam, thereby improving detection performance.

The light spot reorientation mechanism may include one or more stepped reflectors configured to implement walk-off angle rotation. For specific descriptions, refer to the related descriptions in FIG. 16A, FIG. 16B, FIG. 16C, FIG. 17A, and FIG. 17B.

The foregoing uses a coaxial architecture as an example to describe some solutions of this application. The following describes an optical module that uses an off-axis architecture and that is provided in embodiments of this application.

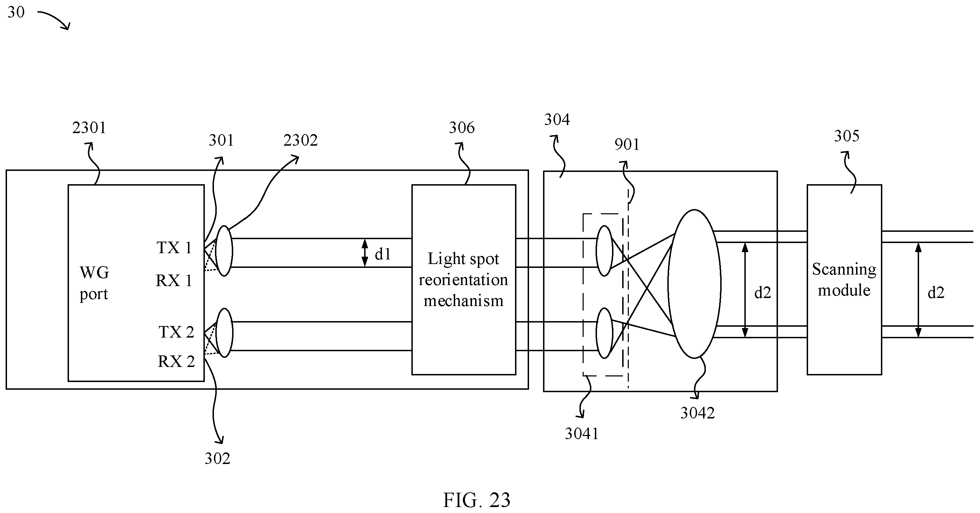

FIG. 23 is a diagram of a structure of an optical module using an off-axis architecture according to an embodiment of this application. The optical module 230 includes a light beam transmit/receive module 2301 and a light spot reorientation mechanism 306. The light beam transmit/receive module 2301 includes N transmit ports 301 and N receive ports 302. The N transmit ports 301 and the N receive ports 302 are arranged in an interleaved manner along an end face of the light beam transmit/receive module.

The N transmit ports are configured to transmit N transmitted light beams, and the N receive ports are configured to receive N returned light beams. The N returned light beams are returned light beams of the N transmitted light beams. The light spot reorientation mechanism 306 is disposed on optical paths of the N transmitted light beams and the N returned light beams. The N transmitted light beams after passing through the light spot reorientation mechanism are used to scan object space. A scanning direction is a second direction. Walk-off angle directions of the N returned light beams before passing through the light spot reorientation mechanism are the second direction. The N returned light beams are arranged along a first direction. The second direction is different from the first direction.

The light spot reorientation mechanism is configured to: turn a walk-off angle direction of each of the N returned light beams into the arrangement direction of the N returned light beams, and provide the N returned light beams for the N receive ports. For a related design of the light spot reorientation mechanism, refer to the foregoing descriptions, for example, the related descriptions in FIG. 16A, FIG. 16B, FIG. 16C, FIG. 17A, and FIG. 17B.

**In a possible implementation,** the optical module 30 further includes a beam expansion module 304, and the beam expansion module 304 is configured to perform beam expansion on the N transmitted light beams and perform beam reduction on the N returned light beams. Further, for a related design of the beam expansion module 2303, refer to the foregoing descriptions.

For example, the beam expansion module shown in FIG. 23 may include a first lens group 3041 and a second lens group 3042, and the first lens group 3041 and the second lens group 3042 have a common focal plane 901. The first lens group 3041 may include a plurality of lenses, and the plurality of lenses may be arranged in a stepped manner or in a parallel manner.

Optionally, in the structure shown in FIG. 23, the light spot reorientation mechanism may include one or more stepped reflectors shown in FIG. 16A, and is configured to turn a walk-off angle direction of each of the N returned light beams into an arrangement direction of the N returned light beams. For related descriptions, refer to related descriptions of FIG. 16A and FIG. 17A.

Optionally, with reference to FIG. 23, the optical module 30 may further include a scanning module, and the scanning module is disposed on an optical path of an end that is of the light spot reorientation mechanism and that is away from the transmit ports. For related descriptions, refer to the foregoing descriptions. Details are not described herein again.

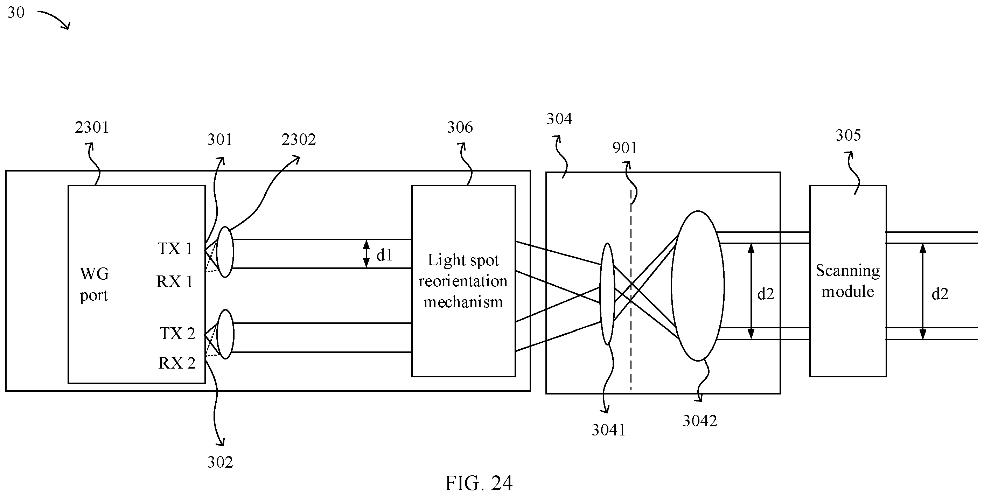

FIG. 24 is a diagram of a structure of another optical module using an off-axis architecture according to an embodiment of this application. N transmit ports 301 and N receive ports 302 are arranged in an interleaved manner, that is, a port next to a transmit port is a receive port. The N transmit ports 301 may transmit N transmitted light beams. Each transmitted light beam reaches a scanner 305 through a light spot reorientation mechanism 306 (optionally, further through the beam expansion module). N returned light beams from the scanner 305 arrive at the N receive ports through the light spot reorientation mechanism along reverse paths of the transmitted light beams.

After passing through the light spot reorientation mechanism 306, walk-off directions of the N returned light beams are rotated to an arrangement direction of the N returned light beams, to facilitate deviation in an arrangement direction of the receive ports, thereby implementing walk-off compensation, reducing a loss of the returned light beams, and improving detection performance.

An embodiment of this application further provides a lidar, and the lidar includes the foregoing optical module. Further, the lidar further includes a light source, for example, a laser. Optionally, a frequency of a light beam transmitted by the light source may change continuously, for example, a frequency-modulated continuous wave (frequency modulated continuous wave, FMCW) laser.

Further, the lidar further includes a detector, and the detector is configured to obtain an electrical signal based on the light beam. For example, the detector may include a photodiode (Photo Diode, PD) that can detect light energy, such as an InGaAs PD, an InP PD, or a germanium PD.

An embodiment of this application further provides a terminal. The terminal includes the foregoing optical module. Alternatively, the terminal includes the foregoing lidar.

Optionally, the terminal may be an intelligent terminal or a transportation means such as a vehicle, an uncrewed aerial vehicle, or a robot. Certainly, the terminal may alternatively be replaced with an industrial device, an entertainment device, or the like. The intelligent terminal is, for example, a mobile phone, a tablet computer, a notebook computer, a smart band, a smartwatch, or smart glasses. The transportation means is, for example, a vehicle, a ship, an aircraft, or a logistics robot. The industrial device is, for example, an industrial robot or a robotic arm. The entertainment device is, for example, a virtual reality (virtual reality, VR) device, a mixed reality (mixed reality, MR) device, a massage chair, or a 4D cinema cockpit. A device to which an electrical connector can be used is not strictly limited in this application.

In descriptions of this application, it should be noted that, unless otherwise clearly specified and limited, the terms such as "link", and "connection" should be understood in a broad sense. For example, a connection may be a fixed connection, may be a detachable connection, or may be an abutting connection or an integral connection. Persons of ordinary skill in the art may understand specific meanings of the foregoing terms in this application according to specific cases.

In embodiments of this application, terms such as "example" or "for example" are used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, the first reflective surface and the second reflective surface are merely for ease of describing the reflective surface, but do not indicate differences in structures, importance, and the like of the first reflective surface and the first reflective surface.

## Claims

1. An optical module, wherein the optical module comprises N transmit ports, N receive ports, a light beam processing module, and a beam expansion module, wherein N is an integer greater than or equal to 1;
the N transmit ports are configured to transmit N transmitted light beams;
the N receive ports are configured to receive returned light beams of the N transmitted light beams;
the light beam processing module is configured to: transmit the N transmitted light beams to the beam expansion module, and deflect N returned light beams from the beam expansion module and propagate the N deflected returned light beams to the N receive ports, wherein the N returned light beams are the returned light beams of the N transmitted light beams, and the N transmitted light beams that pass through the light beam processing module and the N returned light beams from the beam expansion module are coaxial light beams; and
the beam expansion module is configured to perform beam expansion on the N transmitted light beams.

2. The optical module according to claim 1, wherein the light beam processing module comprises a polarization beam splitter PBS, a quarter-wave plate QWP, and a turning mirror, the QWP is disposed on an optical path between the PBS and the beam expansion module, and the turning mirror is disposed on an optical path between the PBS and the N receive ports, wherein
the N transmitted light beams are propagated to the beam expansion module through the PBS and the QWP, and the N returned light beams from the beam expansion module are propagated to the turning mirror through the QWP and the PBS; and
the turning mirror is configured to deflect the light beams that pass through the PBS and propagate the deflected light beams to the N receive ports.

3. The optical module according to claim 2, wherein the PBS is configured to transmit a light beam in a first polarization direction and reflect a light beam in a second polarization direction, and the first polarization direction is perpendicular to the second polarization direction; and
the QWP is configured to change polarization of a light beam that passes through the QWP, and polarization directions of the light beams after the returned light beams of the N transmitted light beams pass through the QWP are perpendicular to polarization directions of the N transmitted light beams.

4. The optical module according to any one of claims 1 to 3, wherein the optical module further comprises a scanning module, and the scanning module is configured to: scan, into object space, the N transmitted light beams that pass through the beam expansion module, and propagate, to the beam expansion module, the returned light beams of the N transmitted light beams from the object space.

5. The optical module according to claim 4, wherein N≥2, and the N returned light beams after passing through the scanning module are arranged along a first direction;
a scanning direction of the scanning module is a second direction, a walk-off angle direction of each of the N returned light beams is the second direction, and the second direction is different from the first direction;
the optical module further comprises a light spot reorientation mechanism, and the light spot reorientation mechanism is disposed on an optical path between the scanning module and the N receive ports; and
the light spot reorientation mechanism is configured to turn the walk-off angle direction of each of the N returned light beams into an arrangement direction of the N returned light beams.

6. The optical module according to claim 5, wherein the light spot reorientation mechanism comprises a first stepped reflector and a second stepped reflector, wherein
the first stepped reflector comprises N first reflective surfaces that are disposed in a stepped manner; and
the second stepped reflector comprises N second reflective surfaces that are disposed in a stepped manner, the N first reflective surfaces are opposite to the N second reflective surfaces one by one, and the second stepped reflector is configured to further reflect emergent light of the first stepped reflector.

7. The optical module according to claim 6, wherein each of the N first reflective surfaces is configured to turn one of the N returned light beams and propagate the turned returned light beam to one of the N second reflective surfaces; and
each of the N second reflective surfaces is configured to turn one of the N returned light beams, so that a walk-off angle direction of the returned light beam is the arrangement direction of the N returned light beams.

8. The optical module according to claim 6 or 7, wherein included angles between a bottom surface of the first stepped reflector and the N first reflective surfaces are 45°, and included angles between a bottom surface of the second stepped reflector and the N second reflective surfaces are 45°.

9. The optical module according to claim 6 or 7, wherein included angles between a bottom surface of the first stepped reflector and the N first reflective surfaces are 45°; and
included angles between the bottom surface of the second stepped reflector and the N second reflective surfaces gradually increase from a step center of the second stepped reflector to two step sides of the second stepped reflector.

10. The optical module according to any one of claims 6 to 9, wherein the light spot reorientation mechanism is a prism, and the N first reflective surfaces and the N second reflective surfaces are implemented by plating a reflective film in the prism.

11. The optical module according to any one of claims 6 to 9, wherein the first stepped reflector comprises a first substrate and N first reflectors, the N first reflectors are attached to the first substrate, and each first reflector comprises one first reflective surface; and
the second stepped reflector comprises a second substrate and N second reflectors, the N second reflectors are attached to the second substrate, and each second reflector comprises one first reflective surface.

12. The optical module according to any one of claims 6 to 11, wherein the beam expansion module comprises a first lens group and a second lens group, and the first lens group and the second lens group have a common focal plane.

13. The optical module according to claim 12, wherein the light spot reorientation mechanism is disposed between the first lens group and the second lens group.

14. The optical module according to claim 12 or 13, wherein the first lens group comprises N lenses, and each of the N lenses is configured to transmit one of the N returned light beams.

15. The optical module according to any one of claims 1 to 14, wherein the optical module further comprises a transmit lens group and a receive lens group, the transmit lens group is disposed between the beam expansion module and the N transmit ports, and the receive lens group is disposed between the beam expansion module and the N receive ports; and
the N transmit ports, the transmit lens group, the N receive ports, the receive lens group, and the light beam processing component are packaged as a first optical assembly, the beam expansion module is packaged as a second optical assembly, light transmissive windows are disposed on the first optical assembly and the second optical assembly, and the light transmissive windows are configured to transmit the N transmitted light beams and the N returned light beams.

16. The optical module according to any one of claims 1 to 15, wherein the N transmit ports and the N receive ports are waveguide ports of a waveguide chip.

17. An optical module, wherein the optical module comprises a light beam transmit/receive module and a light spot reorientation mechanism;
the light beam transmit/receive module comprises N transmit ports and N receive ports, the N transmit ports and the N receive ports are arranged in an interleaved manner along an end face of the light beam transmit/receive module, and N is an integer greater than 1;
the N transmit ports are configured to transmit N transmitted light beams;
the N receive ports are configured to receive N returned light beams, wherein the N returned light beams are returned light beams of the N transmitted light beams;
the light spot reorientation mechanism is disposed on optical paths of the N transmitted light beams and the N returned light beams;
the N transmitted light beams after passing through the light spot reorientation mechanism are used to scan object space, wherein a scanning direction is a second direction;
walk-off angle directions of the N returned light beams before passing through the light spot reorientation mechanism are the second direction, the N returned light beams are arranged along a first direction, and the second direction is different from the first direction; and
the light spot reorientation mechanism is configured to: turn a walk-off angle direction of each of the N returned light beams into the arrangement direction of the N returned light beams, and provide the N returned light beams for the N receive ports.

18. The optical module according to claim 17, wherein the light spot reorientation mechanism comprises a first stepped reflector and a second stepped reflector, wherein
the first stepped reflector comprises N first reflective surfaces that are disposed in a stepped manner; and
the first stepped reflector comprises N second reflective surfaces that are disposed in a stepped manner, the N first reflective surfaces are opposite to the N second reflective surfaces one by one, and the second stepped reflector is configured to further reflect emergent light of the first group stepped reflector.

19. A lidar, wherein the lidar comprises the optical module according to any one of claims 1 to 16, or comprises the optical module according to claim 17 or 18.

20. A terminal, wherein the terminal comprises the optical module according to any one of claims 1 to 16, or comprises the optical module according to claim 17 or 18, or comprises the lidar according to claim 19.
